(19) Europäisches Patentamt / European Patent Office / Office européen des brevets

(11) **EP 4 764 792 A1**

(12) **EUROPEAN PATENT APPLICATION**
published in accordance with Art. 153(4) EPC

(43) Date of publication:
**24.06.2026 Bulletin 2026/26**

(21) Application number: **24856625.9**

(22) Date of filing: **24.06.2024**

(51) International Patent Classification (IPC):
*G06F 3/01* (2006.01)    *G06F 3/00* (2006.01)
*G06T 19/00* (2011.01)    *G06V 40/20* (2022.01)

(52) Cooperative Patent Classification (CPC):
**G06F 3/00; G06F 3/01; G06T 19/00; G06V 40/20**

(86) International application number:
**PCT/KR2024/008730**

(87) International publication number:
**WO 2025/042010 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.08.2023 KR 20230110137**

(71) Applicant: **Samsung Electronics Co., Ltd.
Suwon-si, Gyeonggi-do 16677 (KR)**

(72) Inventors:
• **KIM, Deokho**
  **Suwon-si, Gyeonggi-do 16677 (KR)**
• **KWAK, Junho**
  **Suwon-si, Gyeonggi-do 16677 (KR)**
• **PARK, Hwangpil**
  **Suwon-si, Gyeonggi-do 16677 (KR)**
• **LEE, Gunill**
  **Suwon-si, Gyeonggi-do 16677 (KR)**
• **LEE, Wonwoo**
  **Suwon-si, Gyeonggi-do 16677 (KR)**
• **JEONG, Jiwon**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **AUGMENTED REALITY DEVICE FOR ACQUIRING THREE-DIMENSIONAL POSITION INFORMATION ABOUT HAND JOINT, AND OPERATING METHOD THEREOF**

(57) Disclosed is an augmented reality (AR) device for obtaining three dimensional (3D) position information of hand joints from a plurality of images obtained through a plurality of cameras and an operating method thereof. The AR device may obtain 2D joint coordinate values with respect to feature points of hand joints from a plurality of images obtained by photographing a user's hand through a plurality of cameras, estimate 3D joint coordinate values of the hand joints based on a combination of the 2D joint coordinate values obtained from image combinations each comprised of at least two of the plurality of images, select an image combination having the calculated error distance that is the smallest based on the estimated 3D joint coordinate values from among the image combinations, and obtain 3D position information of the hand joints based on a combination of 2D joint coordinate values from at least two images which constitute the selected image combination.

FIG. 1

## Description

## Technical Field

The present disclosure relates to an augmented reality (AR) device for obtaining three dimensional (3D) position information of joints of a user's hand and an operating method thereof. Specifically, the present disclosure provides an AR device for obtaining 3D position coordinate value information of joints of a user's hand from two dimensional (2D) images obtained by photographing the user's hand with a plurality of cameras, and an operating method thereof.

## Background Art

Augmented reality (AR) is a technology for showing a virtual image by overlaying it on a physical environment space of the real world or a real-world object, and AR devices (e.g., smart glasses) that use the AR technology are being usefully used in daily life for, e.g., information search, directions, camera shooting, games, etc. In particular, the smart glasses may be worn as a fashion item and mainly used for outdoor activities.

In order for the AR device to provide AR services, hand interaction using a three dimensional (3D) pose and gesture of the user's hand as an input means is important for an input interface. For example, a user interface that uses interactions with the user's hand, such as selecting elements of a menu, interacting with a virtual object, selecting an item or placing an object on a virtual hand may be provided by the AR services. Hence, a technology for obtaining 3D position information of joints of the hand, accurately tracking a pose (form) of the hand through the 3D position information and recognizing a gesture is required to implement more realistic AR techniques.

General AR devices use a vision-based hand tracking technology to recognize the user's hand from an image photographed by a camera equipped in the AR device without using a separate external input device, thus leaving both hands of the user free. The AR device obtains the 3D position information of hand joints through triangulation based on positional relationship between cameras and a plurality of 2D images obtained in an overlapping area between fields of view by using a stereo camera including two or more cameras, or obtains the 3D position information of the hand joints by using an 'intersection of rays' method for estimating 3D position coordinates based on points where virtual rays extending from a center position of the plurality of cameras to 2D position coordinates of joints in the plurality of 2D images intersect.

To obtain the 3D position information of the hand joints from the plurality of 2D images, accuracy of 2D position coordinate values with respect to feature points of the hand joints recognized from the plurality of 2D images is important. When inaccurate 2D position coordinate values of a hand joint are obtained from some of the plurality of 2D images, an error in the 3D position information of the hand joint may increase and the accuracy of the 3D position information may decrease. Furthermore, regarding a general RGB camera, the 2D image may be distorted on edges of the whole area of the image due to the lens characteristics, and there may be a distortion error in the process of correcting the distorted image. The distortion error occurring from a distortion of the 2D image may cause an error in the obtained 3D position information of the hand joint and reduce the accuracy.

When the accuracy of the 3D position information of the hand joints is low, the AR device may not recognize or may misrecognize the pose or gesture of the hand.

## Disclosure of Invention

## Solution to Problem

An aspect of the present disclosure provides a method by which an augmented reality (AR) device obtains three dimensional (3D) position information of hand joints. According to an embodiment of the present disclosure, an operating method of an AR device may include obtaining two dimensional (2D) joint coordinate values with respect to feature points of hand joints from a plurality of images obtained by photographing a user's hand through a plurality of cameras. The operating method of the AR device may include estimating 3D joint coordinate values of the hand joints based on a combination of 2D joint coordinate values obtained from image combinations each comprised of at least two of the plurality of images. The operating method of the AR device may include selecting an image combination having an error distance calculated based on the estimated 3D joint coordinate values being the smallest from among the image combinations. The operating method of the AR device may include obtaining 3D position information of the hand joints based on a combination of 2D joint coordinate values from at least two images which constitute the selected image combination.

Another aspect of the present disclosure provides an AR device for obtaining 3D position information of hand joints. According to an embodiment of the present disclosure, the AR device may include a plurality of cameras for obtaining a plurality of images by photographing a user's hand, memory storing at least one instruction, and at least one processor configured to execute the at least one instruction. The at least one processor may execute the at least one instruction to obtain 2D joint coordinate values with respect to feature points of hand joints from a plurality of images obtained through the plurality of cameras. The at least one processor may execute the at least one instruction to estimate 3D joint coordinate values of the hand joints based on a combination of 2D joint coordinate values obtained from image combinations each comprised of at least two of the plurality of images. The at least one processor may execute the at least one instruction to select an image combination having an error distance calculated based on the estimated 3D joint coordinate values being the smallest from among the image combinations. The at least one processor may execute the at least one instruction to obtain 3D position information of the hand joints based on a combination of 2D joint coordinate values from at least two images which constitute the selected image combination.

Another aspect of the present disclosure provides a computer program product including a computer-readable storage medium. The storage medium may include instructions which are readable to an AR device to cause the AR device to perform obtaining 2D joint coordinate values with respect to feature points of hand joints from a plurality of images obtained by photographing a user's hand through a plurality of cameras; estimating 3D joint coordinate values of the hand joints based on a combination of 2D joint coordinate values obtained from image combinations each comprised of at least two of the plurality of images; selecting an image combination having an error distance calculated based on the estimated 3D joint coordinate values being the smallest from among the image combinations; and obtaining 3D position information of the hand joints based on a combination of 2D joint coordinate values from at least two images which constitute the selected image combination.

## Brief Description of Drawings

The present disclosure may be readily understood by combinations of the following detailed descriptions and the accompanying drawings, and reference numerals refer to structural elements.

FIG. 1 is a conceptual diagram for describing an operation of an augmented reality (AR) device for obtaining three dimensional (3D) position information of hand joints, according to an embodiment of the present disclosure.
FIG. 2 is a flowchart illustrating a method by which an AR device obtains 3D position information of hand joints, according to an embodiment of the present disclosure.
FIG. 3 is a block diagram illustrating components of an AR device, according to an embodiment of the present disclosure.
FIG. 4 is a flowchart illustrating a method by which an AR device obtains two dimensional (2D) joint coordinate values with respect to feature points of hand joints from a plurality of images and estimates 3D joint coordinate values of the hand joints based on the obtained 2D joint coordinate values, according to an embodiment of the present disclosure.
FIG. 5 is a flowchart illustrating a method by which an AR device selects a combination of 2D joint coordinate values based on error distances calculated based on estimated 3D joint coordinate values, according to an embodiment of the present disclosure.
FIG. 6 is a flowchart illustrating a method by which an AR device calculates an error distance of a combination of 2D joint coordinate values when no information about lengths between hand joints is stored in memory, according to an embodiment of the present disclosure.
FIG. 7 is a diagram illustrating an operation of an AR device for calculating an error distance of a combination of 2D joint coordinate values, according to an embodiment of the present disclosure.
FIG. 8 is a flowchart illustrating a method by which an AR device calculates an error distance of an image combination based on information about lengths between hand joints pre-stored in a memory, according to an embodiment of the present disclosure.
FIG. 9 is a diagram illustrating an operation of an AR device for calculating an error distance of an image combination based on information about lengths between hand joints pre-stored in a memory, according to an embodiment of the present disclosure.
FIG. 10 is a flowchart illustrating a method by which an AR device selects an image combination based on error distances and priorities of cameras, according to an embodiment of the present disclosure.
FIG. 11 is a diagram illustrating an operation of an AR device for selecting an image combination based on error distances and priorities of cameras, according to an embodiment of the present disclosure.
FIG. 12 is a flowchart illustrating an operation of an AR device for obtaining 3D position information of hand joints from at least two second image frames, according to an embodiment of the present disclosure.
FIG. 13 is a flowchart illustrating a method by which an AR device selects an image combination based on error distances calculated based on estimated 3D joint coordinate values, according to an embodiment of the present disclosure.
FIG. 14 is a diagram illustrating an operation of an AR device for obtaining 3D position information of hand joints based on combinations of 2D joint coordinate values obtained from some image combinations, according to an embodiment of the present disclosure.
FIG. 15 is a diagram illustrating an operation of an AR device for obtaining 3D position information of hand joints based on combinations of 2D joint coordinate values obtained from some image combinations, according to an embodiment of the present disclosure.
FIG. 16 is a flowchart illustrating a method by which an AR device selects some image combinations based on a maximum number of images allowed to be combined, according to an embodiment of the present disclosure.

FIG. 17 is a diagram illustrating an operation of an AR device for obtaining 3D position information of hand joints based on combinations of 2D joint coordinate values from some image combinations, according to an embodiment of the present disclosure.

FIG. 18 is a diagram illustrating an operation of an AR device for obtaining 3D position information of hand joints based on combinations of 2D joint coordinate values obtained from 2D joint coordinate values from image combinations and a 2D joint coordinate value obtained from an additionally selected image frame, according to an embodiment of the present disclosure.

## Mode of the Invention

The terms are selected from among common terms widely used at present, taking into account principles of the present disclosure, which may however depend on intentions of those of ordinary skill in the art, judicial precedents, emergence of new technologies, and the like. Some terms as used herein are selected at the applicant's discretion, in which case, the terms will be explained later in detail in connection with embodiments of the present disclosure. Therefore, the terms should be defined based on their meanings and descriptions throughout the present disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

In the disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" other devices or parts. For example, "a processor configured to perform A, B and C functions" may refer to a dedicated processor, e.g., an embedded processor for performing A, B and C functions, or a generic-purpose processor, e.g., a central processing unit (CPU) or an application processor that may perform A, B and C functions by executing one or more software programs stored in a memory.

When the term "connected" or "coupled" is used, a component may be directly connected or coupled to another component. However, unless otherwise defined, it is also understood that the component may be indirectly connected or coupled to the other component via another new component.

In the present disclosure, augmented reality (AR) refers to showing a virtual image or both real objects and virtual images in a physical environment space of a real word.

In the present disclosure, an AR device is an apparatus capable of representing AR, which may be, for example, not only AR glasses shaped like glasses worn by the user on a facial portion but also a head mounted display apparatus (HMD) or AR helmet worn on the head.

Functions related to artificial intelligence (AI) in the disclosure are operated through a processor and a memory. The processor may be configured with one or more processors. The one or more processors may include a universal processor such as a CPU, an AP, a digital signal processor (DSP), etc., a dedicated graphic processors such as a GPU and a vision processing unit (VPU), or a dedicated AI processor such as an NPU. The one or more processors may control processing of input data according to a predefined operation rule or an AI model stored in the memory. When the one or more processors are the dedicated AI processors, the dedicated AI processors may be designed in a hardware structure that is specific to dealing with a particular AI model.

The predefined operation rule or the AI model is characterized by being made by learning. Specifically, the AI model being made by learning refers to the predefined operation rule or the AI model established to perform a desired feature (or object) being made when a basic AI model is trained by a learning algorithm with a lot of training data. Such learning may be performed by a device itself in which AI is performed according to the disclosure, or by a separate server and/or system. Examples of the learning algorithm may include supervised learning, unsupervised learning, semi-supervised learning, or reinforcement learning, however are not limited thereto.

In the present disclosure, the AI model may be made up of a plurality of neural network layers. Each of the plurality of neural network layers may have a plurality of weight values, and perform neural network operation through operation between an operation result of the previous layer and the plurality of weight values. The plurality of weight values included in the plurality of neural network layers may be optimized by learning results of the AI model. For example, the plurality of weight values may be updated to reduce or minimize a loss value or a cost value obtained by the AI model during a training procedure. The artificial neural network model may include a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network, without being limited thereto.

In the present disclosure, 'vision recognition' refers to image signal processing that inputs an image to an AI model, detects an object from the input image, classifies the object into a certain category or segments the object through inference using the AI model. In an embodiment of the present disclosure, the vision recognition may refer to image processing that recognizes the user's hand from an image photographed by a camera and obtain position information of a plurality of feature points (e.g., joints) included in the hand, by using an AI model.

In the present disclosure, a joint is a part of a human body which connects bones, referring to one or more portions belonging to a hand such as a finger, a wrist, a palm, etc., as well as an upper body such as a neck, an arm, a shoulder, etc.

In the present disclosure, the term 'length between joints' or 'length between hand joints' refers to a length between two joints belonging to the hand.

An embodiment of the present disclosure will now be described in detail with reference to accompanying drawings so as to be readily practiced by those of ordinary skill in the art. However, the embodiments of the disclosure may be implemented in many different forms, and not limited thereto as will be discussed herein.

Embodiments of the disclosure will now be described in detail with reference to accompanying drawings.

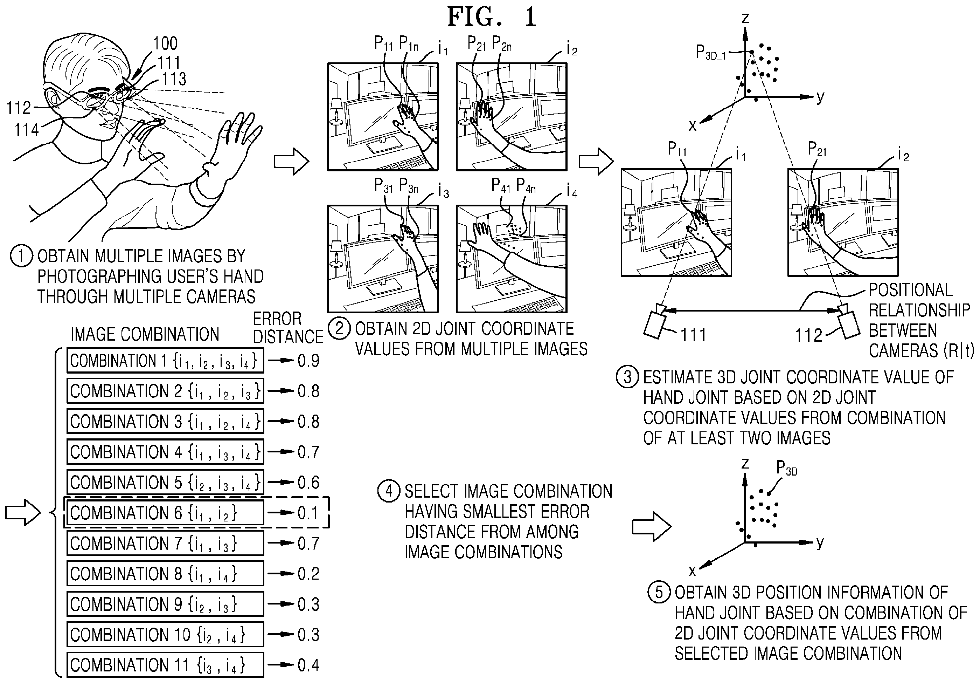

FIG. 1 is a conceptual diagram for describing an operation of an AR device 100 for obtaining three dimensional (3D) position information of hand joints, according to an embodiment of the present disclosure.

The AR device 100 is a device capable of representing AR, and may be configured, for example, as AR glasses shaped like glasses to be worn by the user on a facial portion. The AR device 100 is shown as the AR glasses in FIG. 1, but is not limited thereto. For example, the AR device 100 may be implemented as a head mounted display (HMD) device or an AR helmet to be worn on the head.

Referring to FIG. 1, the AR device 100 may include a plurality of cameras 111, 112, 113 and 114, which are the first camera 111 to the fourth camera 114. In an embodiment shown in FIG. 1, the first camera 111 and the third camera 113 may be located at upper and lower ends, respectively, of a frame enclosing a left-eye lens of the AR device 100, and the second camera 112 and the fourth camera 114 may be located at upper and lower ends, respectively, of a frame enclosing a right-eye lens. The number and positions of the plurality of cameras 111, 112, 113 and 114 included in the AR device 100 are merely an example, and is not limited to what are shown in FIG. 1. In an embodiment of the present disclosure, the AR device 100 may include at least two, e.g., three, five, six,..., and n cameras.

The AR device 100 may obtain a plurality of images $i_1$, $i_2$, $i_3$ and $i_4$ by photographing the user's hand using the plurality of cameras 111, 112, 113 and 14, in operation ①.

The AR device 100 may obtain 2D joint coordinate values from the plurality of images $i_1$, $i_2$, is and $i_4$, in operation ②.

The AR device 100 may estimate a 3D joint coordinate value of a hand joint based on a combination of the 2D joint coordinate values obtained from image combinations each comprised of at least two images, in operation ③.

The AR device 100 may select an image combination having a smallest error distance from among the image combinations, in operation ④.

The AR device 100 may obtain 3D position information of the hand joint based on a combination of the 2D joint coordinate values from at least two images which constitute the selected image combination in operation ⑤.

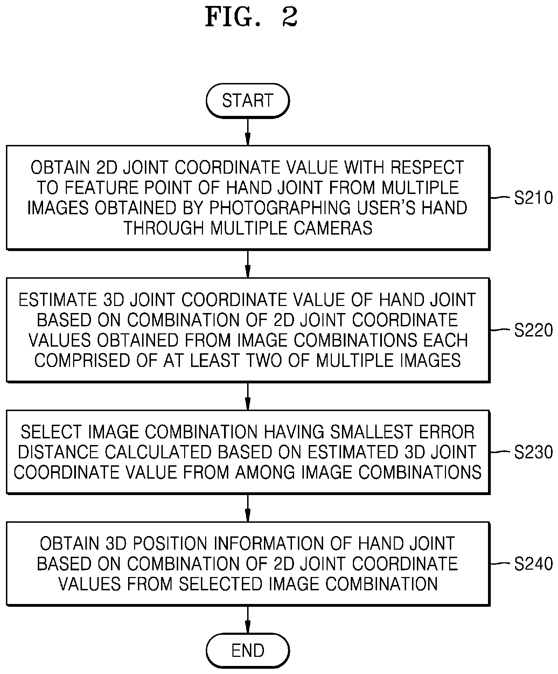

A function and/or operation of the AR device 100 for obtaining 3D position information of a hand joint will now be described in detail with reference to FIGS. 1 and 2.

FIG. 2 is a flowchart illustrating an operating method of the AR device 100, according to an embodiment of the present disclosure.

In operation S210, the AR device 100 obtains 2D joint coordinate values with respect to a feature point of a hand joint from a plurality of images obtained by photographing the user's hand through a plurality of cameras. Also referring to operation ① of FIG. 1, the AR device 100 may obtain the first image $i_1$ to the fourth image $i_4$ by photographing the user's hand located in real space with the first camera 111 to the fourth camera 114. For example, the AR device 100 may obtain the first image $i_1$ by photographing the user's hand using the first camera 111 located at an upper left end of the lens frame, and obtain the second image $i_2$ by photographing the user's hand using the second camera 112 located at an upper right end of the lens frame. The AR device 100 may obtain the third image $i_3$ by photographing the user's hand using the third camera 113 located at a lower left end of the lens frame, and obtain the fourth image $i_4$ by photographing the user's hand using the fourth camera 114 located at a lower right end of the lens frame. In the present disclosure, for convenience of explanation, four images $i_1$ to $i_4$ are shown and described as being obtained through four cameras 111 to 114, but the number of cameras and the number of images are not limited thereto. In an embodiment of the present disclosure, the plurality of cameras may be configured with n cameras, where n is two, three, five or more, and the AR device 100 may obtain n images through n cameras.

Also referring to operation ②, the AR device 100 may recognize a feature point of a hand joint from each of the plurality of images $i_1$ to $i_4$, and obtain 2D joint coordinate values with respect to the feature point. In the present disclosure, joints are portions each connecting multiple bones included in the hand, referring to one or more portions included in a finger, the back of the hand or the palm. In the present disclosure, the feature point may refer to a point easy to identify or distinguish from the surrounding background in the image. The feature point of a hand joint may include at least one of, for example, a feature point of a wrist joint, a feature point of a palm joint, and a feature point of a finger (thumb, index finger, middle finger, ring finger, or little finger).

In an embodiment of the present disclosure, the AR device 100 may recognize the feature point of the hand joint from the first image $i_1$ to the fourth image $i_4$ through vision recognition that uses an artificial intelligence (AI) model. The AI model may include a DNN model trained to recognize an object (e.g., the user's hand) from image data input from the camera and recognize a feature point of the object. In an embodiment of the present disclosure, the DNN model may be a model trained through a supervised learning method that applies tens of thousands or hundreds of millions of images as input data and applies a feature point of a hand joint included in input data as a ground truth. The DNN model may include, for example, at least one of a convolutional neural network (CNN), a recurrent neural network (RNN), a restricted Boltzmann machine (RBM), a deep belief network (DBN), a bidirectional recurrent deep neural network (BRDNN), and a deep Q-network.

The present disclosure is not, however, limited to using an AI model to recognize a feature point of a hand joint from the first image $i_1$ to the fourth image $i_4$. In an embodiment of the present disclosure, the AR device 100 may use a well-known image processing technology to recognize the user's hand from each of the first image $i_1$ to the fourth image $i_4$ and recognize feature points with respect to joints belonging to the hand.

The AR device 100 may obtain 2D joint coordinate values with respect to the recognized feature points of the hand joints. In the embodiment shown in FIG. 1, the AR device 100 may obtain 2D joint coordinate values $P_{11}$ to $P_{1n}$ of hand joints recognized from the first image $i_1$. The 2D joint coordinate values $P_{11}$ to $P_{1n}$ may be 2D position coordinate values of feature points of the hand joints recognized from the first image $i_1$. Likewise, the AR device 100 may obtain 2D joint coordinate values $P_{21}$ to $P_{2n}$ of hand joints recognized from the second image $i_2$, obtain 2D joint coordinate values $P_{31}$ to $P_{3n}$ of hand joints recognized from the third image $i_3$, and obtain 2D joint coordinate values $P_{41}$ to $P_{4n}$ of hand joints recognized from the fourth image $i_4$.

Referring back to FIG. 2, in operation S220, the AR device 100 estimates 3D joint coordinate values of the hand joints based on combinations of the 2D joint coordinate values from image combinations each having at least two of the plurality of images. In the present disclosure, the image combinations may refer to combinations of at least two images. Also referring to FIG. 1, the image combinations may include a first combination $\{i_1, i_2, i_3, i_4\}$ comprised of four images including the first image $i_1$ to the fourth image $i_3$, a second combination $\{i_1, i_2, i_3\}$, a third combination $\{i_1, i_2, i_4\}$, a fourth combination $\{i_1, i_3, i_4\}$ and a fifth combination $\{i_2, i_3, i_4\}$ comprised of three images selected from among the first image $i_1$ to the fourth image $i_4$, and a sixth combination $\{i_1, i_2\}$, a seventh combination $\{i_1, i_3\}$, an eighth combination $\{i_1, i_4\}$, a ninth combination $\{i_2, i_3\}$, a tenth combination $\{i_2, i_4\}$ and an eleventh combination $\{i_3, i_4\}$ comprised of two images selected from among the first image $i_1$ to the fourth image $i_4$. In the present disclosure, the image combinations are shown and described as including a total of eleven combinations, but the number of image combinations is not limited thereto. In an embodiment of the present disclosure, the image combinations may include m image combinations each comprised of at least two images out of a total of n images.

The AR device 100 may obtain the 3D joint coordinate values of the hand joints through triangulation based on position relationship between the cameras and a combination of at least two images obtained through two or more of the plurality of cameras 111, 112, 113 and 114. In an embodiment of the present disclosure, the AR device 100 may estimate the 3D joint coordinate values of the hand joints through the 'intersection of rays' method that obtains a 3D position coordinate value based on a point where virtual rays extending from a center position of the plurality of cameras to the 2D joint coordinate values in at least two images intersect. The disclosure is not, however, limited to the aforementioned example, and the AR device 100 of the present disclosure may use any of well-known methods to obtain a 3D joint coordinate value through a combination of 2D joint coordinate values obtained from a combination of at least two images.

Also referring to operation ③ of FIG. 1, the AR device 100 may estimate a 3D joint coordinate value $P_{3D\_1}$ based on a combination $\{P_{11}, P_{21}\}$ of 2D joint coordinate values obtained from a combination comprised of the first image $i_1$ and the second image $i_2$. Although not shown in the drawings, the AR device 100 may estimate 3D joint coordinate values from a combination of 2D joint coordinate values obtained from image combinations (the first combination to the eleventh combination) each comprised of at least two of the first image $i_1$ to the fourth image $i_4$.

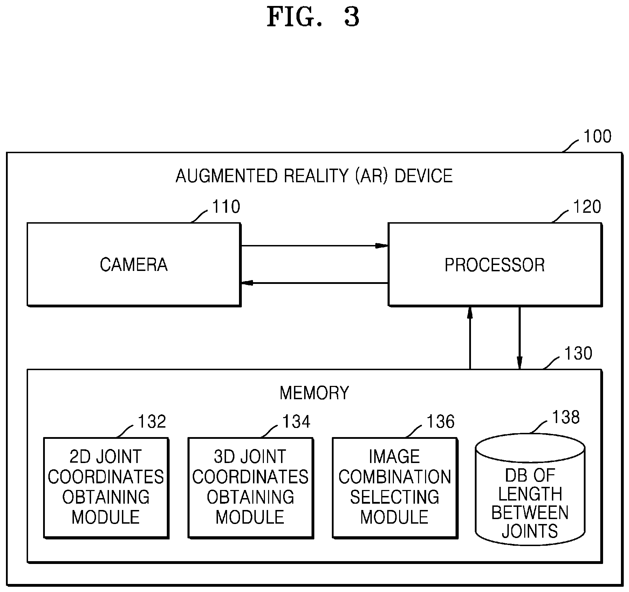

In operation S230 of FIG. 2, the AR device 100 selects an image combination having an error distance calculated based on the estimated 3D joint coordinate values being the smallest from among the image combinations. The AR device 100 may measure a length between hand joints based on the 3D joint coordinate values estimated from the combination of the 2D joint coordinate values, and calculate an error distance for the image combination by comparing the measured length between the hand joints with length between joints stored in memory 130 (see FIG. 3). In the present disclosure, the term 'length between hand joints' refers to a length between two joints belonging to the hand. When information about the length between hand joints is not stored in the memory 130, the AR device 100 may calculate an error distance that occurs in converting the 2D joint coordinate values obtained from at least two images constituting each image combination to the 3D joint coordinate value. In an embodiment of the present disclosure, the AR device 100 may obtain information about a center position of a virtual 3D structure formed by rays extending from a center position of at least two of the plurality of cameras 111, 112, 113 and 114 to the 2D joint coordinate values in the at least two images, and calculate an error distance based on the shortest distance from the center position of the virtual 3D structure to each ray.

When the information about the length between hand joints is stored in the memory 130, the AR device 100 may obtain a length between hand joints by measuring the length between 3D joint coordinate values based on 3D joint coordinate values estimated based on the 2D joint coordinate values, and calculate an error distance by comparing the obtained length between the hand joints with a length between the hand joints stored in the memory 130. In an embodiment of the present disclosure, the AR device 100 may calculate error distances based on difference values between the obtained lengths between hand joints and an average of lengths between hand joints pre-stored in the memory 130 and a standard deviation of the pre-stored lengths between joints, and normalize the calculated error distances.

The AR device 100 may select an image combination having the calculated error distance being the smallest from among the at least two image combinations. Also referring to operation ④ of FIG. 1, the calculated error distance of the first combination comprised of the first image $i_1$ to the fourth image $i_4$ may be 0.9, and the calculated error distances of the second combination, the third combination, the fourth combination and the fifth combination comprised of three of the first image $i_1$ to the fourth image $i_4$ may be 0.8, 0.8, 0.7 and 0.6, respectively. The calculated error distances of the sixth combination to the eleventh combination comprised of two of the first image $i_1$ to the fourth image $i_4$ may be 0.1, 0.7, 0.2, 0.3, 0.3 and 0.4, respectively. The AR device 100 may select the sixth combination whose error distance is calculated to have a smallest value of 0.1 from among the first to eleventh combinations.

In operation S240 of FIG. 2, the AR device 100 obtains 3D position information of the hand joints based on combinations of 2D joint coordinate values in the selected image combination. In an embodiment of the present disclosure, the AR device 100 may obtain 3D position information of the hand joints based on a combination of the 2D joint coordinate values from at least two images which constitute the selected image combinations. Referring to operation ⑤ of FIG. 1, the AR device 100 may obtain 3D position information of the hand joints through triangulation based on a combination of 2D joint coordinate values obtained from the first image $i_1$ and the second image $i_2$ that constitute the sixth combination having the smallest error distance among the image combinations and positional relationship between the first camera 111 and the second camera 112. It is not, however, limited thereto, and when the selected image combination includes three or more images, the AR device 100 may obtain the 3D position information of the hand joints from a combination of 2D joint coordinate values through the 'intersection of rays' method.

In order for the AR device 100 to provide AR services, hand interaction using 3D pose and gesture of the user's hand as an input means is important for an input interface. To implement more realistic AR techniques, a technology to obtain 3D position information of joints belonging to the hand, accurately track a pose (form) of the hand through the 3D position information and recognize a gesture is required. When the accuracy of the 3D position information of the hand joints is low, the AR device may not recognize or may misrecognize the pose or gesture of the hand.

To obtain accurate 3D position information of the hand joints from the plurality of 2D images obtained through the plurality of cameras 111, 112, 113 and 114, accuracy of 2D position coordinate values with respect to feature points of the hand joints recognized from the plurality of 2D images is important. In a vision-based hand tracking technology, the accuracy in 3D position information of the hand joints needs to be improved to enhance the recognition accuracy of a pose or gesture of the hand and provide reliable AR services.

The present disclosure aims to provide the AR device 100 for obtaining more accurate 3D position information of hand joints based on a combination of a plurality of 2D images and an operating method thereof, to improve accuracy in recognizing a pose or gesture of the user's hand in the vision-based hand tracking technology.

In the embodiment shown in FIGS. 1 and 2, the AR device 100 provides a technical effect of improving the accuracy in recognizing a pose or gesture of the user's hand in the vision-based hand tracking technology by calculating error distances based on 3D joint coordinate values estimated from each of the image combinations comprised of the plurality of images $i_1$, $i_2$, $i_3$ and $i_4$ obtained through the plurality of cameras 111, 112, 113 and 114, selecting an image combination having the calculated error distance being the smallest and obtaining 3D position information of the hand joints based on 2D joint coordinate values in the selected image combination. As the accuracy in recognizing a pose or gesture of the hand is enhanced, the AR device 100 according to an embodiment of the present disclosure has the merit of providing users with a stable hand interaction experience and reducing dependency on the use of an external controller or an external device including a hand tracking sensor in providing AR services.

Furthermore, in an embodiment of the present disclosure, the AR device 100 may obtain 3D position information of hand joints only through a combination of images obtained by at least two of the plurality of cameras

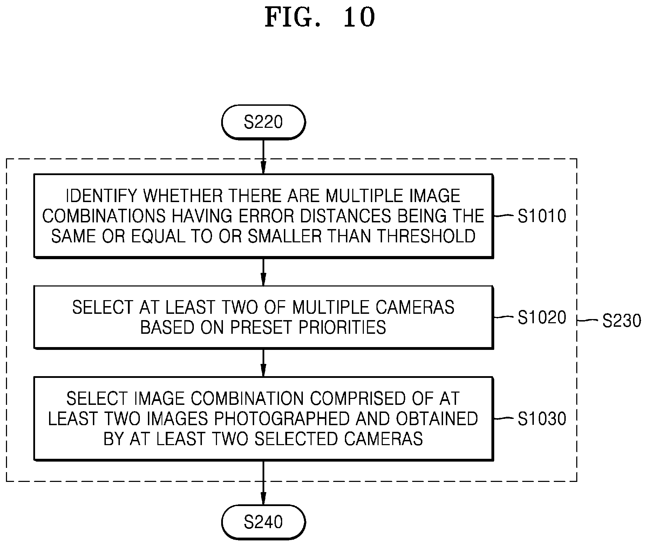

111, 112, 113 and 114, thereby providing a technical effect of reducing an amount of computation resulting from recognition of feature points of the hand joints and estimation of 3D joint coordinate values for all the plurality of images and saving power consumption. Such a technical effect will be described later in detail in embodiments of the present disclosure shown in FIGS. 10 to 18.

FIG. 3 is a block diagram illustrating components of the AR device 100, according to an embodiment of the present disclosure.

Referring to FIG. 3, the AR device 100 may include a camera 110, a processor 120, and a memory 130. The camera 110, the processor 120 and the memory 130 may be electrically and/or physically connected to one another. Only some components for describing an operation of the AR device 100 are shown in FIG.3, but components included in the AR device 100 are not limited to those shown in FIG. 3. In an embodiment of the present disclosure, the AR device 100 may further include a communication interface for performing data communication with an external device or a server. In an embodiment of the present disclosure, the AR device 100 may be implemented as a portable device, in which case the AR device 100 may further include a battery for supplying operation power to the camera 110 and the processor 120.

The camera 110 is configured to obtain a hand image by photographing a real space and the hand in the real space. The camera 110 may include a lens module, an image sensor and an image processing module. The camera 110 may obtain a still image or a video about an object through the image sensor (e.g., CMOS or CCD). The video may include a plurality of image frames obtained consecutively by photographing the object through the camera 110. The image processing module may encode a still image having a single image frame or video data comprised of a plurality of image frames obtained through the image sensor and send it to the processor 120.

In an embodiment of the present disclosure, the camera 110 may be implemented as a small form factor to be mounted on the portable AR device 100 and may be implemented as a light-weighted RGB camera that consumes low power.

The camera 110 may include two or more cameras. In an embodiment of the present disclosure, the camera 110 may include the first camera 111 (see FIG. 1) to the fourth camera 114 (see FIG. 1). For example, when the AR device 100 is implemented as AR glasses shaped like glasses to be worn on a facial portion of the user, the first camera 111 and the third camera 113 (see FIG. 1) may be located at upper and lower ends of a frame that encloses a left-eye lens of the AR device 100 and the second camera 112 (see FIG. 1) and the fourth camera 114 may be located at upper and lower ends of a frame that encloses a right-eye lens. The plurality of cameras may obtain a plurality of images including the user's hand by photographing the hand.

The processor 120 may execute one or more instructions of a program stored in the memory 130. The processor 120 may include hardware components for performing arithmetic, logical, and input/output operations and image processing. The processor 120 is shown as one element in FIG. 3, but is not limited thereto. In an embodiment of the present disclosure, the processor 120 may be configured with one or more elements. One or more processors included in the processor 120 may be such circuitries as system on chips (SoCs), integrated circuits (ICs), etc.

The processor 120 may include various processing circuits and/or a plurality of processors. For example, the term 'processor' used in the present disclosure including claims may include various processing circuits including at least one processor. One or more of the at least one processor may be individually and/or collectively, in a distributed fashion, configured to perform various functions as described in the present disclosure. As herein used, the processor, at least one processor or one or more processors may be configured to perform various functions. However, these terms cover, without limitation, a situation in which one processor performs some of the functions while other processor(s) perform some other functions, and a situation in which a single processor may perform all the functions. Furthermore, the at least one processor may include a combination of processors that perform the disclosed various functions in a distributed fashion. The at least one processor may execute program instructions to fulfill or perform various functions.

The processor 120 may be a universal processor such as a central processing unit (CPU), an application processor (AP), a digital signal processor (DSP), etc., a dedicated graphic processor such as a graphic processing unit (GPU), a vision processing unit (VPU), etc., or a dedicated artificial intelligence (AI) processor such as a neural processing unit (NPU). The processor 120 may execute at least one instruction or program code stored in the memory 150 to control processing of input data according to pre-defined operation rules or an AI model. In a case that the processor 120 is the dedicated AI processor, the dedicated AI processor may be designed in a hardware structure specialized for dealing with a particular AI model.

The memory 130 may include, for example, at least one type of storage media including a flash memory, a hard disk, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), or an optical disk.

The memory 130 may store instructions related to functions and/or operations for obtaining 3D position information of hand joints from an image combination comprised of two or more of the plurality of images obtained by the AR device 100 through the cameras 110. In an embodiment of the disclosure, the memory 130 may store at least one of algorithms, data structures, program codes, application programs, and instructions that are readable to the processor 120. The instructions, algorithms, data structures and program codes stored in the memory 130 may be implemented in e.g., a programming or scripting language such as C, C++, Java, assembler, etc.

The memory 130 may store instructions, algorithms, data structures or program codes with respect to a 2D joint coordinates obtaining module 132, a 3D joint coordinates obtaining module 134 and an image combination selecting module 136. The modules included in the memory 130 may refer to units of processing the functions or operations performed by the processor 120, and may be implemented in software such as instructions, algorithms, data structures or program codes. In an embodiment of the present disclosure, the memory 130 may include a database of lengths between joints 138.

The processor 120 may execute the instructions or program codes stored in the memory 130. Functions and/or operations performed when the processor 120 executes the instructions or program codes of each of the plurality of modules stored in the memory 130 will now be described in detail.

The 2D joint coordinates obtaining module 132 is configured with instructions or program codes for performing a function and/or operation for recognizing feature points of hand joints from images and obtaining 2D joint coordinate values with respect to the feature points. In the present disclosure, joints are portions each connecting multiple bones included in the hand, referring to one or more portions included in a finger, the back of the hand or the palm. In the present disclosure, the feature point may refer to a point easy to identify or distinguish from the surrounding background in the image. The feature points of hand joints may include at least one of, for example, feature points of wrist joints, feature points of palm joints, and feature points of fingers (thumb, index finger, middle finger, ring finger, or little finger).

The processor 120 may obtain 2D joint coordinate values with respect to feature points of hand joints from the plurality of images obtained through the cameras 110 by executing the instructions or program codes of the 2D joint coordinates obtaining module 132. In an embodiment of the present disclosure, the plurality of cameras may obtain a plurality of images by photographing the user's hand and provide image data of the plurality of obtained images to the processor 120. The processor 120 may recognize feature points of hand joints of the user from the plurality of images and obtain 2D joint coordinate values with respect to the feature points.

In an embodiment of the present disclosure, the 2D joint coordinates obtaining module 132 may include a vision recognition AI model for recognizing feature points of hand joints from the images. The AI model may include a DNN model trained to recognize an object (e.g., the user's hand) from the image data and recognize a feature point of the object. In an embodiment of the present disclosure, the DNN model may be a model trained through a supervised learning method that applies tens of thousands or hundreds of millions of images as input data and applies the feature points of hand joints included in the input data as ground truths. The DNN model may include, for example, at least one of a convolutional neural network (CNN), a recurrent neural network (RNN), a restricted Boltzmann machine (RBM), a deep belief network (DBN), a bidirectional recurrent deep neural network (BRDNN), and a deep Q-network. The processor 120 may input a plurality of images obtained through the plurality of cameras to the DNN model, and recognize feature points of the hand joints through inferencing using the DNN model. The processor 120 may obtain 2D joint coordinate values, which are 2D position coordinate values of the recognized feature points.

The 3D joint coordinates obtaining module 134 is configured with instructions or program codes for performing a function and/or operation for obtaining or estimating 3D joint coordinate values, which are 3D position coordinate values of the hand joints, through a combination of the 2D joint coordinate values from a combination of at least two images. In an embodiment of the present disclosure, the 3D joint coordinates obtaining module 134 is configured to obtain or estimate 3D joint coordinate values by using triangulation that uses a combination of 2D joint coordinate values and positional relationship between the plurality of cameras for obtaining images or using the 'intersection of rays' method that uses a combination of three or more 2D joint coordinate values and information about a center point between the plurality of cameras. The processor 120 may estimate 3D joint coordinate values through a combination of 2D joint coordinate values obtained from an image combination by executing the instructions or program codes of the 3D joint coordinates obtaining module 134. In the present disclosure, the image combination may refer to a combination of at least two images. For example, when the cameras 110 include n cameras, n images are obtained, in which case the image combination may include a combination including n images, a combination including n-1 images selected from among n images, a combination including n-2 images selected from among n images, ..., or a combination including n-m (which is 2) images selected from among n images.

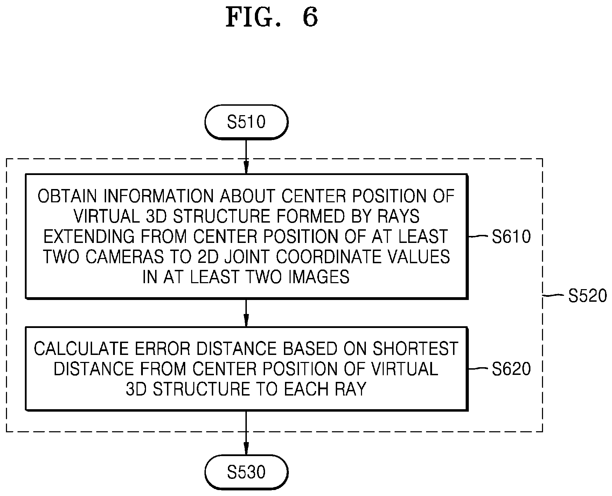

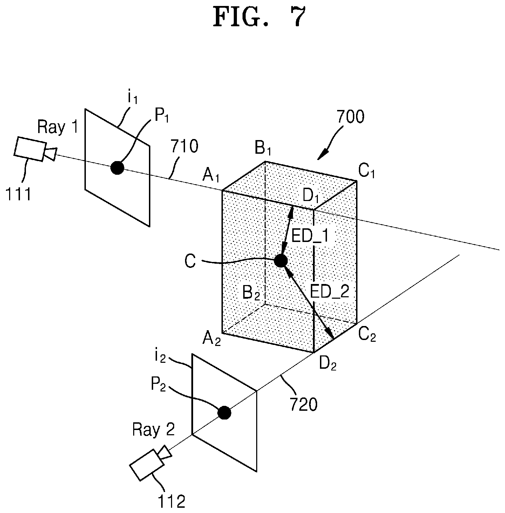

The image combination selecting module 136 is configured with instructions or program codes for performing a function and/or operation for selecting an image combination having the smallest error distance from among image combinations. The processor 120 may calculate an error distance of each image combination based on the estimated 3D joint coordinate values, and select an image combination having the calculated error distance being the smallest from among the image combinations, by executing the instructions or program codes of the image combination selecting module 136. When no information about the obtained length between hand joints is stored in the database 138 of lengths between joints, the processor 120 may calculate an error distance created in the process of converting the 2D joint coordinate values obtained from at least two images that constitute each image combination to 3D joint coordinate values. In an embodiment of the present disclosure, the processor 120 may obtain information about a center position of a virtual 3D structure formed by rays extending from the center position of at least two of the plurality of cameras to the 2D joint coordinate values in the at least two images, and calculate an error distance based on the shortest distance from the obtained center position of the virtual 3D structure to each ray. The processor 120 may determine an error of a combination of the 2D joint coordinate values with respect to a sum or average of the calculated error distances. When no information about the obtained length between hand joints is stored in the database 138 of lengths between joints, a specific embodiment for calculating the error distances will be described in detail in connection with FIGS. 6 and 7.

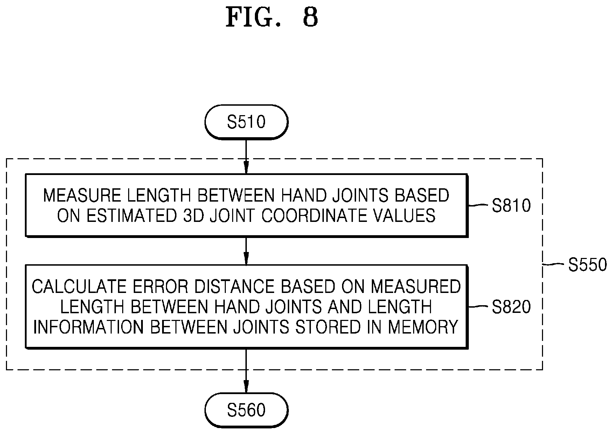

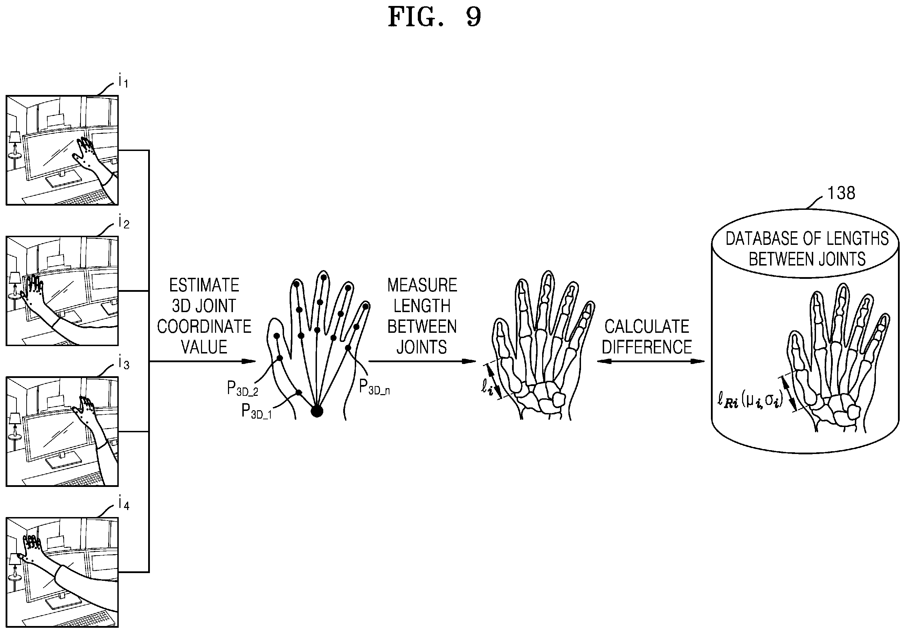

When the information about the obtained length between hand joints is stored in the database 138 of lengths between joints in the memory 130, the processor 120 may measure lengths between hand joints based on 3D joint coordinate values estimated from at least two images that constitute each image combination, and calculate error distances by comparing the measured lengths between hand joints with lengths between joints stored in the database 138. In an embodiment of the present disclosure, the processor 120 may normalize the error distances based on difference values between the measured lengths between hand joints and an average of lengths between joints stored in the database 138 of lengths between joints and a standard deviation of the stored lengths between hand joints. For example, the processor 120 may normalize an error distance for each joint by calculating a Mahalanobis distance. In an embodiment of the present disclosure, the processor 120 may determine an error of the image combination based on a sum or average of the error distances calculated for the respective joints. When the information about the obtained length between hand joints is stored in the database 138 of lengths between joints, a specific embodiment for calculating the error distances will be described in detail in connection with FIGS. 8 and 9.

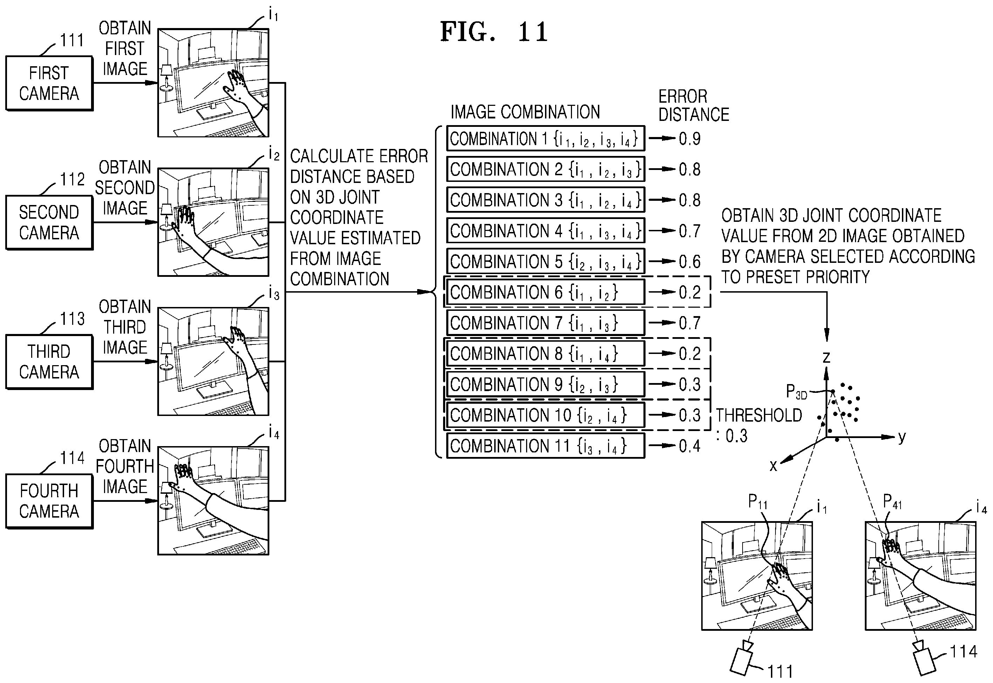

The processor 120 may select an image combination having the smallest error distance calculated for the respective image combinations. In an embodiment of the present disclosure, when a plurality of image combinations having the calculated error distances being the same or equal to or smaller than a threshold are identified, the processor 120 may select at least two of the plurality of cameras based on preset priorities, and select an image combination comprised of at least two images obtained by the at least two selected cameras. A specific embodiment of selecting an image combination based on the priorities of the cameras will be described in detail in connection with FIGS. 10 and 11.

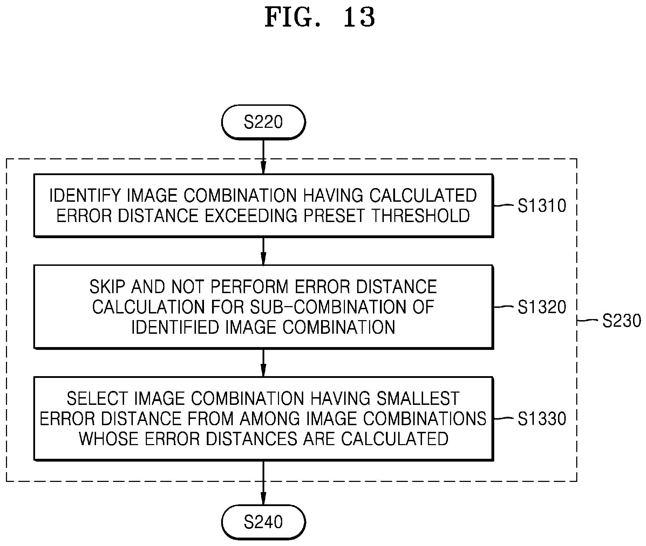

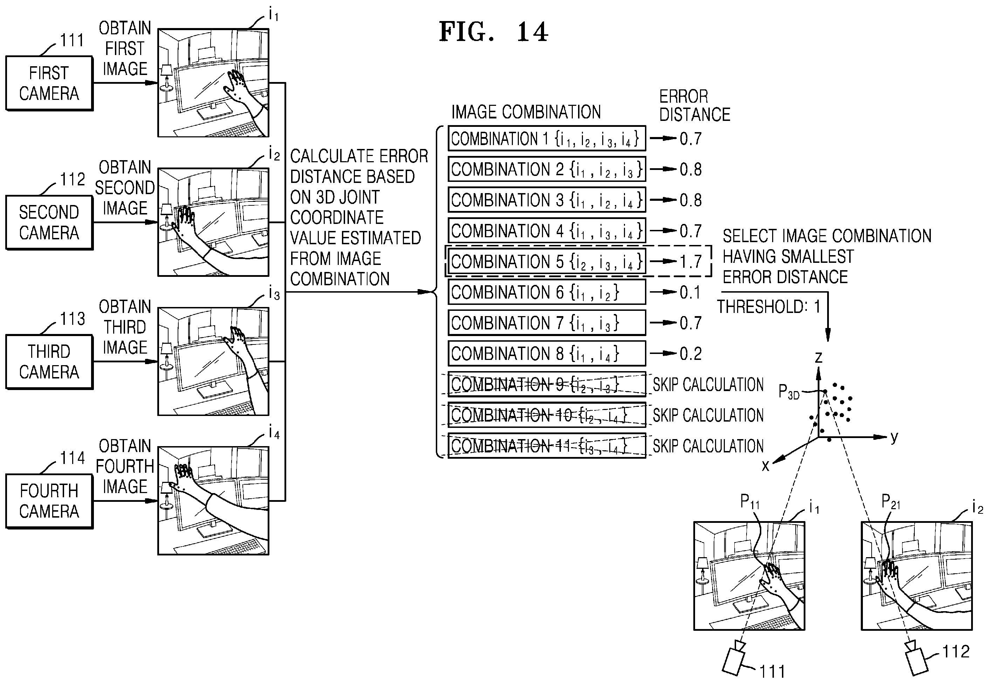

In an embodiment of the present disclosure, the processor 120 may identify an image combination having a calculated error distance exceeding the preset threshold, and skip and not performing error distance calculation for sub-combinations of the identified image combination. The processor 120 may select an image combination having the smallest error distance from among the image combinations whose error distances are calculated. A specific embodiment of skipping error distance calculation for the sub-combinations of the image combination whose error distance exceeds the threshold will be described in detail in connection with FIGS. 13 and 14.

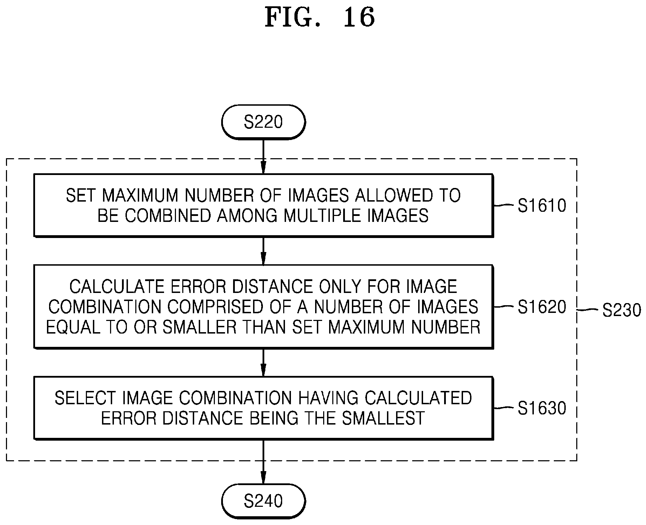

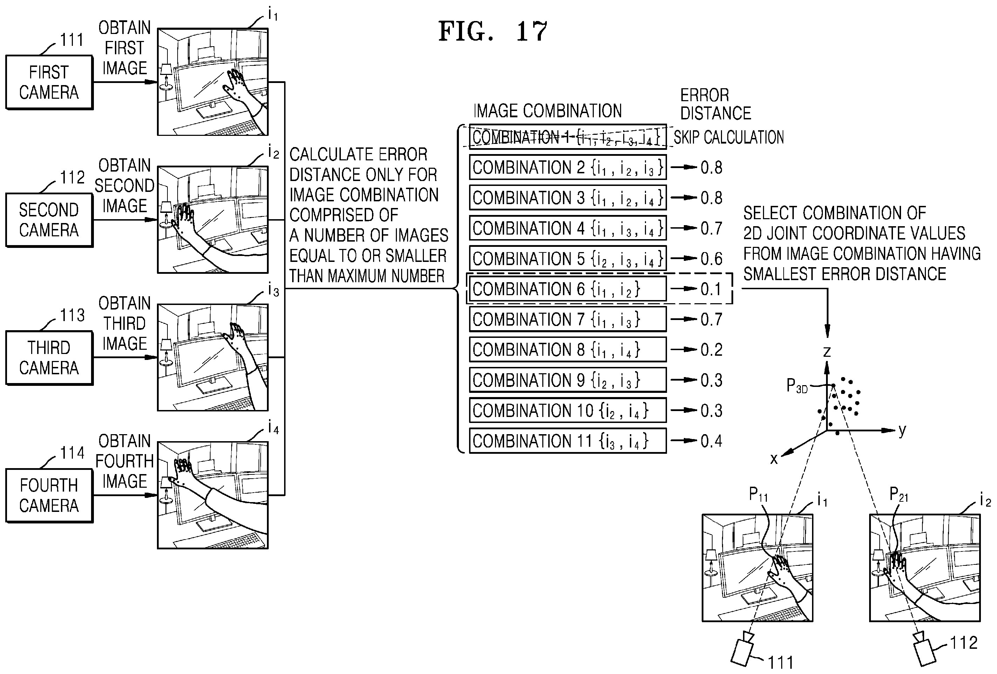

In an embodiment of the present disclosure, the processor 120 may set a maximum number of images allowed to be combined, and calculate an error distance only for an image combination comprised of a number of images equal to or smaller than the set maximum number. The processor 120 may select an image combination having the calculated error distance being the smallest from among the image combinations comprised of a number of images equal to or smaller than the maximum number. A specific embodiment of selecting an image combination having the smallest error distance when the maximum number of images allowed to be combined is set will be described in detail in connection with FIGS. 16 and 17.

The processor 120 may obtain 3D position information of hand joints based on the selected combination of 2D joint coordinate values. In an embodiment of the present disclosure, the processor 120 may obtain 3D position coordinate values of hand joints based on the selected combination of 2D joint coordinate values and the positional relationship between the plurality of cameras. For example, the processor 120 may use triangulation or the 'intersection of rays' method to obtain 3D position coordinate values of hand joints from a combination of 2D joint coordinate values.

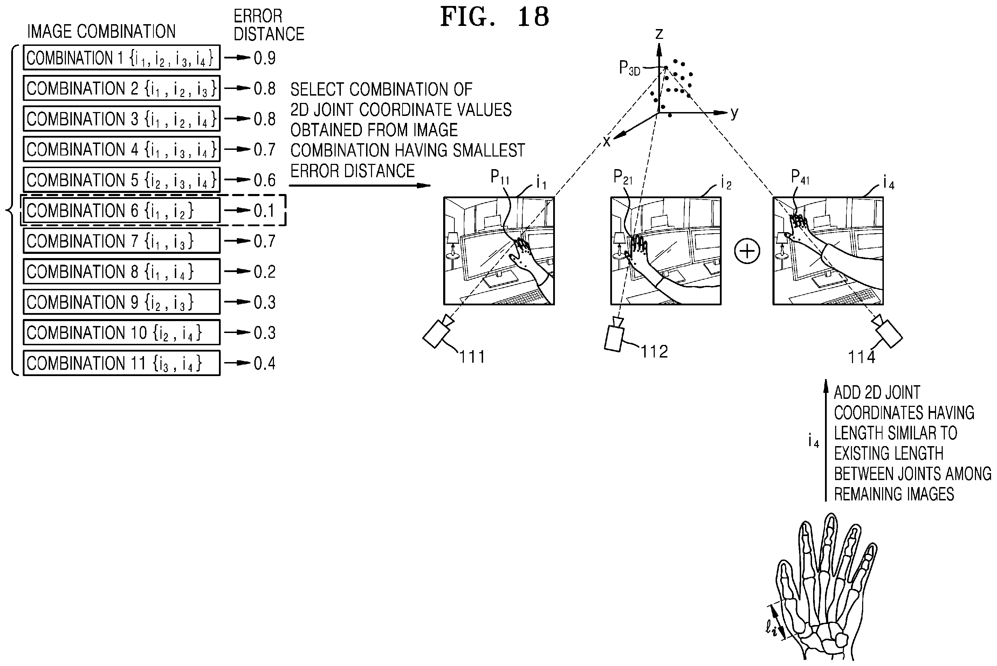

In an embodiment of the present disclosure, the processor 120 may obtain 3D position information of hand joints by using 2D joint coordinate values obtained from other images than at least two images that constitute the image combination related to the selected combination of 2D joint coordinate values. The processor 120 may obtain 3D position coordinate values of hand joints by using at least one 2D joint coordinate value that forms length between hand joints similar to the length between joints stored in the database 138 of lengths between joints among 2D joint coordinate values obtained from other images not included in the selected image combination with a combination of 2D joint coordinate values obtained from the selected image combination. A specific embodiment of obtaining 3D position coordinate values of hand joints by using 2D joint coordinate values obtained from the other images with a combination of 2D joint coordinate values from the selected image combination will be described in detail in connection with FIG. 18.

Although not shown, the AR device 100 may further include a display. The display may display a virtual object interacting with the user's hand. When the AR device is implemented as AR glasses shaped like glasses, the display may be configured as an optical lens system, including a waveguide and an optical engine. The optical engine may be configured with a projector that generates light of a virtual object comprised of a virtual image and projects the light to the waveguide. The optical engine may include, for example, an image panel, a lighting optical system, a projecting optical system, etc. In an embodiment of the present disclosure, the optical engine may be arranged on eyeglass temples or the frame of the AR glasses. In an embodiment of the present disclosure, the optical engine may display the virtual object by projecting the virtual object onto the waveguide under the control of the processor 120.

It is not, however, limited thereto, and the display may be configured with at least one of a liquid crystal display (LCD), a thin film transistor-liquid crystal display (TFT-LCD), organic light-emitting diodes (OLEDs), a flexible display, a 3D display, or an electrophoretic display.

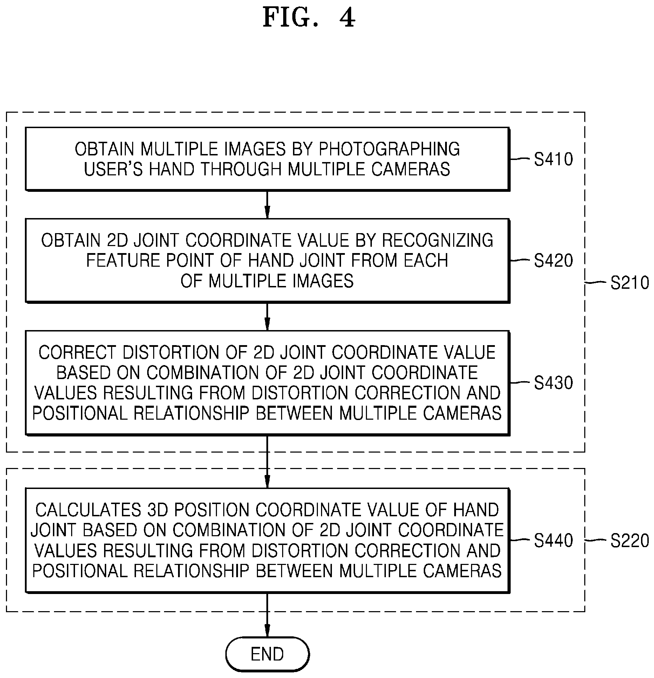

FIG. 4 is a flowchart illustrating a method by which the AR device 100 obtains 2D joint coordinate values with respect to feature points of hand joints from a plurality of images and estimates 3D joint coordinate values of the hand joints based on the obtained 2D joint coordinate values, according to an embodiment of the present disclosure.

Operations S410 to S430 shown in FIG. 4 are detailed operations of operation S210 shown in FIG. 2. Operation S440 shown in FIG. 4 is a detailed operation of operation S220 shown in FIG. 2. Operation S440 shown in FIG. 4 may be followed by operation S230 shown in FIG. 2.

In operation S410, the AR device 100 obtains a plurality of images by photographing the user's hand through a plurality of cameras. In an embodiment of the present disclosure, the AR device 100 may include the plurality of cameras that include RGB image sensors. There may be, e.g., four cameras, without being limited thereto. The AR device 100 may obtain a plurality of 2D images by photographing the user's hand with the plurality of cameras.

In operation S420, the AR device 100 recognizes feature points of hand joints from each of the plurality of images and obtains 2D joint coordinate values. In an embodiment of the present disclosure, the AR device 100 may obtain 2D joint coordinate values with respect to feature points of the hand joints from the plurality of images through vision recognition using an AI model. The vision recognition using the AI model is described above in connection with FIGS. 1 to 3, so the redundant description will be omitted.

In operation S430, the AR device 100 corrects distortions of the 2D joint coordinate values based on a distortion correction parameter and positional relationship between the plurality of cameras. In the present disclosure, a distortion model parameter is a parameter of a mathematical model for correcting an image distortion phenomenon that occurs due to physical characteristics of the camera's lens. An image distortion model may be defined according to the physical characteristics of the lens. For the distortion model, there is a Barrel distortion model, a Brown distortion model or a pincushion distortion model, however are not limited thereto. The distortion model parameter may include parameters for correcting the image based on the distortion model defined according to the physical characteristics of the lens after the image is obtained with the camera. In the present disclosure, the positional relationship between the plurality of cameras [R|t] may include information about relative positions and directions between the cameras in a camera layout structure depending on the size, form or design of the AR device 100. In an embodiment of the present disclosure, the positional relationship between the cameras [R|t] may include a rotation matrix represented by R and a translation vector represented by t. The processor 120 (see FIG. 3) of the AR device 100 may correct distortions of the 2D joint coordinate values based on the distortion model parameters that mathematically model the distortion model according to physical characteristics of the lens included in each of the plurality of cameras and relative positional relationship between the plurality of cameras [R|t].

In operation S440, the AR device 100 calculates 3D position coordinate values of hand joints based on a combination of 2D joint coordinate values resulting from the distortion correction and the positional relationship between the plurality of cameras. In an embodiment of the present disclosure, the processor 120 of the AR device 100 rectifies the direction of each of the plurality of images based on the distortion model parameters and the positional relationship between the plurality of cameras. In an embodiment of the present disclosure, the processor 120 may rectify the directions of the plurality of images by arranging epipolar lines of the plurality of images in parallel based on the relative positional relationship between the plurality of cameras [R|t] and the distortion model parameters of each of the plurality of cameras. Image rectification is a technology well-known to those of ordinary skill in the art, so the detailed description thereof will be omitted.

In an embodiment of the present disclosure, the processor 120 may calculate 3D joint coordinate values of the hand joints through triangulation that uses the corrected 2D joint coordinate values resulting from distortion correction and rectification and the positional relationship between the plurality of cameras [R|t]. It is not, however, limited thereto, and the processor 120 may calculate the 3D joint coordinate values of the hand joints through the 'intersection of rays' method based on the distortion-corrected 2D joint coordinate values and the positional relationship between the plurality of cameras [R|t].

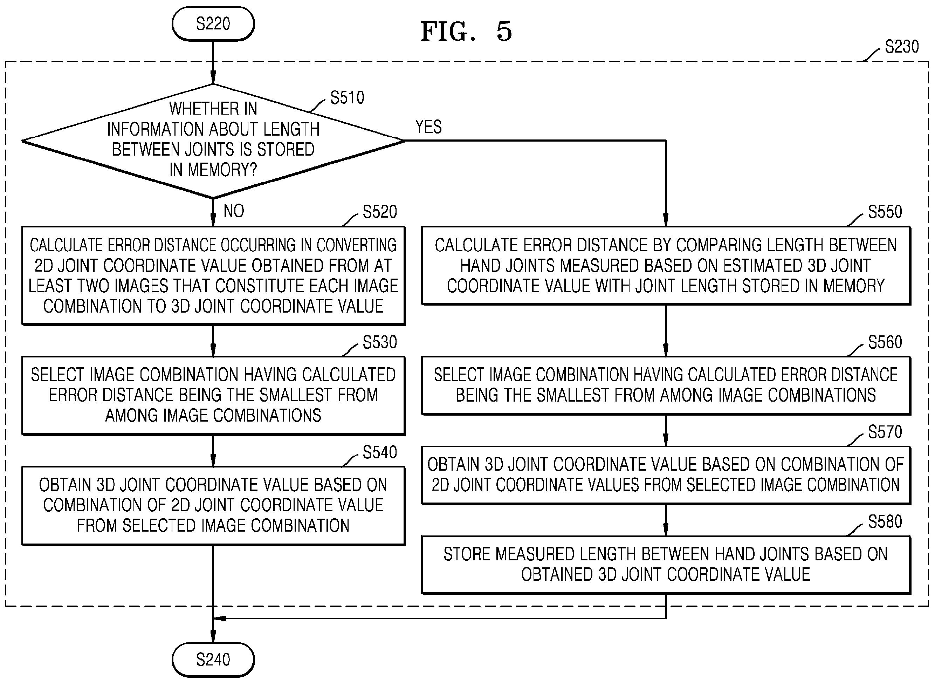

FIG. 5 is a flowchart illustrating a method by which the AR device 100 selects a combination of 2D joint coordinate values based on error distances calculated based on estimated 3D joint coordinate values, according to an embodiment of the present disclosure.

Operations S510 to S550 shown in FIG. 5 are detailed operations of operation S230 of FIG. 2. Operation S530 or S550 shown in FIG. 5 is followed by operation S240 of FIG. 2E.

In operation S510, the AR device 100 determines whether information about lengths between joints is stored in the memory. In an embodiment of the present disclosure, information about the obtained lengths between hand joints may be stored in the database 138 of lengths between joints in the memory 130 (see FIG. 3). It is not, however, limited thereto, and for example, for a new device or new user, the information about lengths between hand joints may not be pre-stored in the database 138 of lengths between joints.

When the information about lengths between joints is not stored in the memory 130 in operation S520, the AR device 100 may calculate error distances occurring in converting the 2D joint coordinate values obtained from each image combination comprised of at least two of the plurality of images to the 3D joint coordinate values. In an embodiment of the present disclosure, the AR device 100 may obtain information about a center position of a virtual 3D structure formed by rays extending from a center position of at least two cameras to the 2D joint coordinate values in the at least two images, and calculate an error distance based on the shortest distance from the center position of the virtual 3D structure to each ray. A specific embodiment of operation S520 will be described in detail in connection with FIGS. 6 and 7.

In operation S530, the AR device 100 selects an image combination having the calculated error distance being the smallest from among image combinations. The AR device 100 may compare error distances calculated for the respective combinations of 2D joint coordinate values obtained from the respective image combinations, and select an image combination having the smallest error distance.

In operation S540, the AR device 100 obtains 3D joint coordinate values based on a combination of 2D joint coordinate values from the selected image combination. In an embodiment of the present disclosure, the AR device 100 may calculate the 3D joint coordinate values based on 2D joint coordinate values obtained from at least two images that constitute the selected image combination and the positional relationship between the at least two cameras configured to obtain the at least two images. A specific method by which the AR device 100 calculates the 3D joint coordinate values is described above in connection with FIG. 4, so the redundant description will be omitted.

When the information about lengths between joints is stored in the database 138 (see FIG. 3) of lengths between joints in the memory 130 (see FIG. 3) in operation S550, the AR device 100 calculates error distances by comparing the length between hand joints measured based on the estimated 3D joint coordinate values with the length between joints stored in the memory. In an embodiment of the present disclosure, the AR device 100 may measure a length between hand joints based on the 3D joint coordinate values estimated from the combination of the 2D joint coordinate values, and calculate an error distance by comparing the measured length between the hand joints with an average of the lengths between the joints stored in the database 138 of lengths of joints. In an embodiment of the present disclosure, the AR device 100 may calculate an error distance for each of the joints included in the hand, and determine an error distance for a combination of the 2D joint coordinate values by adding error distances calculated for the respective joints. It is not, however, limited thereto, and in an embodiment of the present disclosure, the AR device 100 may determine an average of error distances calculated for the respective joints included in the hand as an error distance for the combination of 2D joint coordinate values.

In operation S560, the AR device 100 selects an image combination having the calculated error distance being the smallest from among image combinations. In an embodiment of the present disclosure, the AR device 100 may compare error distances calculated for the respective combinations of 2D joint coordinate values obtained from the respective image combinations, and select an image combination having the smallest error distance.

In operation S570, the AR device 100 obtains 3D joint coordinate values based on a combination of 2D joint coordinate values from the selected image combination. In an embodiment of the present disclosure, the AR device 100 may calculate 3D joint coordinate values based on 2D joint coordinate values obtained from at least two images that constitute the selected image combination and the positional relationship between the at least two cameras configured to obtain images for obtaining the 2D joint coordinate values.

In operation S580, the AR device 100 stores lengths between joints measured based on the generated 3D joint coordinate values. In an embodiment of the present disclosure, the AR device 100 may measure lengths between joints included in the hand based on the generated 3D joint coordinate values, and store the measured lengths between joints in the database 138 (see FIG. 3) of lengths between joints.

FIG. 6 is a flowchart illustrating a method by which the AR device 100 calculates an error distance of a combination of 2D joint coordinate values when no information about lengths between hand joints is stored in the memory 130 (see FIG.3), according to an embodiment of the present disclosure.

Operations S610 and S620 shown in FIG. 6 are detailed operations of operation S520 of FIG. 5. Operation S610 shown in FIG. 6 may be performed after operation S510 of FIG. 5 is performed. Operation S620 shown in FIG. 6 may be followed by operation S530 of FIG. 5.

FIG. 7 is a diagram illustrating an operation of the AR device 100 for calculating error distances ED_1 and ED_2 of a combination of 2D joint coordinate values $\{P_1, P_2\}$ from an image combination $\{i_1, i_2\}$, according to an embodiment of the present disclosure.

A function and/or operation of the AR device 100 for calculating the error distances ED_1 and ED_2 of the combination of 2D joint coordinate values $\{P_1, P_2\}$ when the information about lengths between hand joints is not stored in the memory 130 will now be described with reference to FIGS. 6 and 7.

In operation S610 of FIG. 6, the AR device 100 obtains information about a center position of a virtual 3D structure formed by rays extending from a center position of at least two cameras to 2D joint coordinate values in the at least two images. Also referring to the embodiment shown in FIG. 7, the processor 120 (see FIG. 3) of the AR device 100 may form a virtual 3D structure 700 based on a first ray 710 extending from a center position of the first camera 111 toward the first 2D joint coordinate value $P_1$ in the first image $i_1$, and a second ray 720 extending from a center position of the second camera 112 toward the second 2D joint coordinate value $P_2$ in the second image $i_2$. The virtual 3D structure 700 may have the form of a cuboid including coordinates $A_1$ and $D_1$ formed on the first ray 710 and coordinates $C_2$ and $D_2$ formed on the second ray 720 as vertices. It is not, however, limited thereto, and the virtual 3D structure 700 may be formed in the shape of a polyhedron, a cylinder or a sphere. The processor 120 may obtain 3D position information of a center C of the virtual 3D structure 700. The processor 120 may obtain the 3D position information of the center C based on information about, for example, a center of gravity or a center of mass of the virtual 3D structure 700.

Referring to FIG. 6, in operation S620, the AR device 100 calculates an error distance based on a shortest distance from the center position of the virtual 3D structure to each ray. Also referring to FIG. 7, the processor 120 of the AR device 100 may calculate the first error distance ED_1 based on the shortest distance between the center C of the virtual 3D structure 700 and the first ray 710. The first error distance ED_1 may be calculated based on a distance that an end of a vertical line starting from the center C of the virtual 3D structure 700 reaches the first ray 710. Likewise, the processor 120 may calculate the second error distance ED_2 based on the shortest distance between the center C of the virtual 3D structure 700 and the second ray 720.

The processor 120 may determine an error distance of the combination of the 2D joint coordinate values $\{P_1, P_2\}$ by calculating a sum or average of the first error distance ED_1 and the second error distance ED_2. FIG. 7 is an example for convenience of explanation, illustrating an embodiment of calculating an error distance of the combination of the 2D joint coordinate values $\{P_1, P_2\}$ obtained from the first image $i_1$ and the second image $i_2$ obtained with the first camera 111 and the second camera 112, but the present disclosure is not limited thereto. The processor 120 may calculate an error distance of a combination of 2D joint coordinate values obtained from a combination of at least two images in the method shown in FIG. 7. Furthermore, in an embodiment of the present disclosure, the AR device 100 may calculate an error distance for a combination of 2D joint coordinate values by using any well-known technology for calculating an error distance occurring in the process of converting the combination of 2D joint coordinate values to a 3D joint coordinate value.

FIG. 8 is a flowchart illustrating a method by which the AR device 100 calculates an error distance of an image combination by using information about lengths between hand joints pre-stored in the memory 130 (see FIG. 3), according to an embodiment of the present disclosure.

Operations S810 and S820 shown in FIG. 8 are detailed operations of operation S550 of FIG. 5. Operation S810 shown in FIG. 8 may be performed after operation S510 of FIG. 5 is performed. Operation S820 shown in FIG. 8 may be followed by operation S560 of FIG. 5.

FIG. 9 is a diagram illustrating an operation of the AR device 100 for calculating an error distance of an image combination by using information about lengths between hand joints pre-stored in the memory 130 (see FIG. 3), according to an embodiment of the present disclosure.

A function and/or operation of the AR device 100 for calculating an error distance of a combination of 2D joint coordinate values obtained from image combinations when information about the obtained lengths between joints is stored in the database 138 of lengths between joints will now be described with reference to FIGS. 8 and 9.

In operation S810 of FIG. 8, the AR device 100 measures lengths between hand joints based on estimated 3D joint coordinate values. The AR device 100 may measure lengths between joints included in the hand by using 3D joint coordinate values estimated based on a combination of 2D joint coordinate values. Also referring to FIG. 9, the processor 120 (see FIG. 3) of the AR device 100 may obtain 3D joint coordinate values $P_{3D\_1}$, $P_{3D\_2}$, $P_{3D\_3}$,..., and $P_{3D\_n}$ based on a combination of 2D joint coordinate values from image combinations each comprised of at least two of the plurality of images $i_1$ to $i_4$. The processor 120 may measure lengths $l_i$ between joints included in the hand based on the obtained 3D joint coordinate values $P_{3D\_1}$, $P_{3D\_2}$, $P_{3D\_3}$, ... , $P_{3D\_n}$. In the embodiment shown in FIG. 9, the processor 120 may measure the length $l_i$ between the first 3D joint coordinate value $P_{3D\_1}$ that represents a carpometacarpal joint and the second 3D joint coordinate value $P_{3D\_2}$ that represents a metacarpophalangeal joint included in the hand (the length of a metacarpal bone in the embodiment of FIG. 9).

Referring back to FIG. 8, in operation S820, the AR device 100 calculates an error distance based on the measured hand joint length and joint length information stored in the memory. Also referring to FIG. 9, the processor 120 of the AR device 100 may calculate an error distance by comparing the measured length $l_i$ between hand joints with length $l_{Ri}$ between joints pre-stored in the database 138 of lengths between joints. In an embodiment of the present disclosure, the processor 120 may accumulate information about lengths between hand joints measured from each of n image frames and store the accumulated information in the database 138 of lengths between joints, and estimate the accumulated information about lengths $l_{Ri}$ between joints in a Gaussian distribution. The processor 120 may use the mean and standard deviation of the estimated Gaussian distribution to calculate Mahalanobis distance for the newly measured length $l_i$ between hand joints, and determine the calculated Mahalanobis distance as an error distance with respect to the length $l_i$ between joints.

[Equation 1]

$$\text{Mahalanobis distance: } d_i = \sqrt{\frac{(x_i - \mu_i)^2}{\sigma_i^2}}$$

Referring to equation 1, the processor 120 may calculate a Mahalanobis distance $d_i$ by performing an operation of dividing a square of a difference between length $x_i$ between joints calculated based on the 3D joint coordinate value and an average $\mu_i$ of lengths $l_{Ri}$ between joints stored in the database 138 of lengths between joints by a square of the standard deviation $\sigma$ of the stored lengths $l_{Ri}$ between joints. The Mahalanobis distance is a value obtained by normalizing the error distance based on a difference between the measured length $l_i$ between joints and the length $l_{Ri}$ between joints stored in the database 138 of lengths between joints, and the processor 120 may determine the calculated Mahalanobis distance $d_i$ as an error distance of i-th joint. In an embodiment of the present disclosure, the processor 120 may calculate the Mahalanobis distances $d_i$ for all the joints included in the hand, and calculate an error distance of an image combination through a sum of the calculated Mahalanobis distances $d_i$. It is not, however, limited thereto, and in an embodiment of the present disclosure, the processor 120 may calculate an error distance of an image combination through the mean value or weighted sum of the Mahalanobis distances $d_i$ for the respective joints.

FIG. 10 is a flowchart illustrating a method by which the AR device 100 selects an image combination based on error distances and priorities of cameras, according to an embodiment of the present disclosure.

Operations S1010 to S1030 shown in FIG. 10 are detailed operations of operation S230 of FIG. 2.

Operation S1010 shown in FIG. 10 may be performed after operation S220 of FIG. 2 is performed. Operation S1030 shown in FIG. 10 may be followed by operation S240 of FIG. 2.

FIG. 11 is a diagram illustrating an operation of the AR device 100 for selecting an image combination based on error distances and priorities of the cameras 111 to 114, according to an embodiment of the present disclosure.

An operation of the AR device 100 for selecting a combination of 2D joint coordinate values based on error distances and priorities of the cameras 111 to 114 will now be described with reference to FIGS. 10 and 11.

In operation S1010 of FIG. 10, the AR device 100 identifies whether there are a plurality of image combinations having the same error distance or having error distances equal to or less than a threshold. In an embodiment of the present disclosure, the AR device 100 may identify whether there are two or more combinations of 2D joint coordinate values having the same error distance calculated for the respective image combinations each comprised of two or more images or there is a combination of 2D joint coordinate values having an error distance equal to or less than the preset threshold.

Also referring to FIG. 11, the AR device 100 may obtain the first image $i_1$ by photographing the user's hand through the first camera 111. Likewise, the AR device 100 may obtain the second image $i_2$ through the second camera 112, the third image $i_3$ through the third camera 113 and the fourth image $i_4$ through the fourth camera 114. The AR device 100 may obtain a combination of 2D joint coordinate values from each of the image combinations (the first combination to the eleventh combination) each comprised of at least two of the first image $i_1$ to the fourth image $i_4$. In the embodiment shown in FIG. 11, among the image combinations, the first combination may include all the first image $i_1$ to the fourth image $i_4$, the second to fifth combinations may be image combinations including three images selected from the first image $i_1$ to the fourth image $i_4$, and the sixth to eleventh combinations may be image combinations including two images selected from the first image $i_1$ to the fourth image $i_4$. The number of the plurality of images $i_1$ to $i_4$ and the number of image combinations are taken as an example for convenience of explanation, and the number of the plurality of images and the number of image combinations are not limited to those shown in FIG. 11.

The processor 120 (see FIG. 3) of the AR device 100 may estimate 3D joint coordinate values based on a combination of 2D joint coordinate values obtained from each of the image combinations (first to eleventh combinations), and calculate an error distance for each image combination based on the estimated 3D joint coordinate values. The method by which the processor 120 estimates 3D joint coordinate values from a combination of 2D joint coordinate values of feature points of hand joints obtained from the image combinations and calculates error distances based on the estimated 3D joint coordinate values is equal to what are described in FIGS. 1 to 9, so the redundant description will be omitted.

The AR device 100 may identify whether there are a plurality of image combinations having error distances calculated for the respective image combinations (the first to eleventh combinations) being the same or equal to or less than the preset threshold. In the embodiment illustrated in FIG. 11, the second and third combinations have the same error distance of 0.8, the sixth and eighth combinations have the same error distance of 0.2, and the ninth and tenth combinations have the same error distance of 0.3. Furthermore, when the threshold of the error distance is preset to 0.3, image combinations having error distances equal to or less than the threshold are the sixth combination, the eighth combination, the ninth combination and the tenth combination. The processor 120 of the AR device 100 may identify, among the image combinations including the first to eleventh combinations, the second and third combinations, the sixth and eighth combinations and the ninth and tenth combinations, which have the same error distances, and identify the sixth, eighth, ninth and tenth combinations having error distances equal to or less than the threshold.

Referring back to FIG. 10, in operation S1020, the AR device 100 selects at least two of the plurality of cameras based on preset priorities. Also referring to FIG. 11, priorities of the plurality of cameras 111 to 114 may be set in advance. For example, of the plurality of cameras 111 to 114, the first camera 111 may be set to a first priority, the fourth camera 114 to a second priority, the second camera 112 to a third priority and the third camera 113 to a fourth priority. It is not, however, limited thereto, and in an embodiment of the present disclosure, the AR device 100 may receive user inputs (e.g., hand pointing inputs) to determine priorities of the plurality of cameras 111 to 114, and determine a priority of each of the plurality of cameras 111 to 114 based on the received user input.

The processor 120 of the AR device 100 may select at least two of the plurality of cameras 111 to 114 based on the priorities. For example, the processor 120 may select the first camera 111 and the fourth camera 114 from among the plurality of cameras 111 to 114 based on the set priorities.

Referring back to FIG. 10, in operation S1030, the AR device 100 selects an image combination comprised of at least two images photographed and obtained by the at least two selected cameras. In an embodiment of the present disclosure, the AR device 100 may select an image combination comprised of images obtained by at least two cameras selected based on the set priorities from among a plurality of image combinations having error distances which are the same or are equal to or less than the threshold. Also referring to the embodiment illustrated in FIG. 11, the processor 120 of the AR device 100 may select the eighth combination comprised of the first image $i_1$ and the fourth image $i_4$ obtained by the first camera 111 and the fourth camera 114 selected based on the set priorities from among the sixth, eighth, ninth and tenth combinations having error distances which are the same or are equal to or less than the threshold.

The processor 120 may obtain 3D position information (a 3D position coordinate value $P_{3D}$) of a hand joint based on a combination of 2D joint coordinate values $\{P_{11}, P_{41}\}$ obtained from the first image $i_1$ and the fourth image $i_4$ which constitute the eighth combination.

As the accuracy of a 2D joint coordinate value recognized from an image obtained by a camera increases, a higher priority may be set to the camera. In the embodiments illustrated in FIGS. 10 and 11, when a plurality of image combinations having error distances, which are the same or which are equal to or less than the threshold, are identified, the AR device 100 may select at least two cameras selected based on the set priorities and obtain 3D position information of a hand joint from at least two images obtained by using the at least two selected cameras, thereby providing a technological effect of increasing the accuracy of the 3D position information of the hand joint.

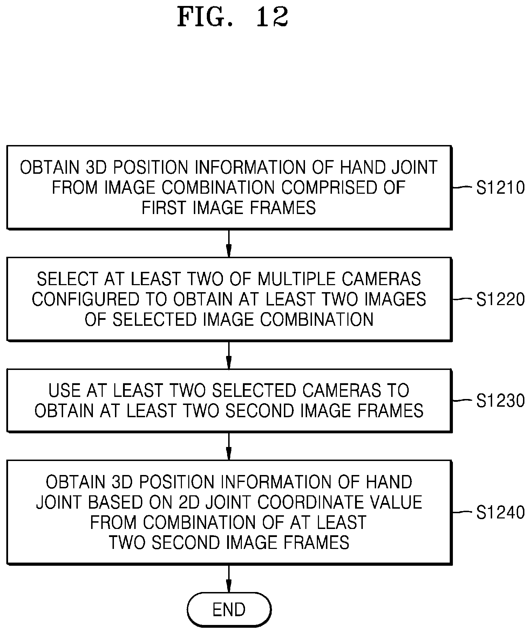

FIG. 12 is a flowchart illustrating an operation of the AR device 100 for obtaining 3D position information of hand joints from at least two second image frames, according to an embodiment of the present disclosure.

In operation S1210, the AR device 100 obtains 3D position information of a hand joint from an image combination of first image frames. In an embodiment of the present disclosure, the processor 120 (see FIG. 3) of the AR device 100 may select an image combination of first image frames having the smallest error distance from among a plurality of first image frames obtained at a first point of time, and obtain 3D position information of a hand joint based on a combination of 2D joint coordinate values from a combination of at least two first image frames that constitute the selected image combination. For example, the processor 120 may use triangulation or the 'intersection of rays' method to obtain 3D position information a hand joint based on a combination of 2D joint coordinate values from an image combination of first image frames.

In operation S1220, the AR device 100 selects, from among the plurality of cameras, at least two cameras configured to obtain at least two images from which the selected image combination is obtained. For example, when the image combination selected in operation S1210 is a combination of the first image, the second image and the fourth image, the processor 120 may select the first, second and fourth cameras configured to obtain the first, second and fourth images, respectively, from among the plurality of cameras.

In operation S1230, the AR device 100 may use the at least two selected cameras to obtain at least two second image frames. For example, in operation S1220, when the first camera, the second camera and the fourth camera are selected, the processor 120 may obtain the second image frames (including the first image, the second image and the fourth image) by photographing the user's hand only with the first camera, the second camera and the fourth camera at a second point of time.

In operation S1240, the AR device 100 obtains 3D position information of a hand joint based on a combination of 2D joint coordinate values from a combination of at least two second image frames. For example, in operations S1230, when the second image frames (including the first, second and fourth images) are obtained by using the first, second and fourth cameras, the processor 120 may obtain 3D position information, a 3D joint coordinate value of a hand joint, based on the combination of the 2D joint coordinate values obtained from the combination of the second image frames including the first, second and fourth images.

The AR device 100 according to the embodiment shown in FIG. 12 selects at least two cameras configured to obtain at least two images included in an image combination having the smallest error distance among image combinations of first image frames obtained at a former point of time (the first point of time) and obtains the 3D position information of the hand joint from a combination of at least two second image frames obtained by using the at least two selected cameras at a later point of time (the second point of time), thereby dispensing with computations such as recognizing hand joint feature points, obtaining 2D joint coordinate values and estimating a 3D joint coordinate value, thus providing a technical effect of reducing an amount of computation and saving power consumption.

FIG. 13 is a flowchart illustrating a method by which the AR device 100 selects an image combination based on error distances calculated based on estimated 3D joint coordinate values, according to an embodiment of the present disclosure.

Operations S1310 to S1330 shown in FIG. 13 are detailed operations of operation S230 of FIG. 2. Operation S1310 shown in FIG. 13 may be performed after operation S220 of FIG. 2 is performed. Operation S1330 shown in FIG. 13 may be followed by operation S240 shown in FIG. 2.

FIG. 14 is a diagram illustrating an operation of the AR device 100 for obtaining 3D position information $P_{3D}$ of a hand joint based on a combination of 2D joint coordinate values $\{P_{11}, P_{21}\}$ obtained from some of image combinations, according to an embodiment of the present disclosure.

Operations of the AR device 100 will now be described with reference to FIGS. 13 and 14.

Referring to FIG. 13, in operation S1310, the AR device 100 identifies an image combination having a calculated error distance exceeding a preset threshold. In an embodiment of the present disclosure, the preset threshold is an upper limit of error distances with the accuracy of the 3D position information likely to be calculated as being lower than a reference value, and may be set in advance. For example, the preset threshold may be 1. However, it is not limited thereto. Also referring to the embodiment shown in FIG. I4, the AR device 100 may obtain the first image $i_1$ to fourth image $i_4$ by photographing the user's hand through the first camera 111 to fourth camera 114, estimate a 3D joint coordinate value based on a combination of 2D joint coordinate values obtained from each of the image combinations (the first combination to the eleventh combination) comprised of at least two of the first image $i_1$ to fourth image $i_4$, and calculate an error distance of each image combination based on the estimated 3D joint coordinate value. In the embodiment shown in FIG. 14, descriptions of the image combinations are the same as in the embodiment of FIG. 11 except for error distances, the redundant description will be omitted. Referring to the embodiment shown in FIG. 14, the processor 120 (see FIG. 3) of the AR device 100 may identify the fifth combination having an error distance of 1.7 that exceeds the threshold (e.g., 1) among the image combinations including the first to eleventh combinations.

Referring back to FIG. 13, in operation S1320, the AR device 100 does not perform but skip calculation of error distances for sub-combinations of the identified image combination. Also referring to the embodiment shown in FIG. 14, the processor 120 may not calculate error distances for sub-combinations of the second image $i_2$, the third image $i_3$ and the fourth image $i_4$ that constitute the fifth combination. For example, the processor 120 may not perform but skip calculation of error distances for the ninth combination of the second image $i_2$ and the third image $i_3$, the tenth combination of the second image $i_2$ and the fourth image $i_4$, and the eleventh combination of the third image $i_3$ and the fourth image $i_4$.

Referring to FIG. 13, in operation S1330, the AR device 100 selects an image combination having the smallest error distance from among image combinations whose error distances are calculated. Also referring to the embodiment shown in FIG. 14, the processor 120 of the AR device 100 may select the sixth combination having the smallest error distance from among the first to eighth combinations other than the ninth, tenth and eleventh combinations among the first to eleventh combinations. The processor 120 may obtain 3D position information $P_{3D}$ of a hand joint based on a combination of 2D joint coordinate values $\{P_{11}, P_{21}\}$ obtained from the first image $i_1$ and the second image $i_2$ which constitute the sixth combination.

In the embodiments shown in FIGS. 13 and 14, the AR device 100 may identify a combination (the fifth combination in the embodiment shown in FIG. 14) having an error distance exceeding a preset reference value with respect to the accuracy among the image combinations (the first to eleventh combinations) to be searched for to obtain the 3D position information $P_{3D}$ of the hand joint, and skip calculation of error distances for sub-combinations of the identified combination, thereby increasing searching speed. Furthermore, in the embodiment of the present disclosure, the AR device 100 skips calculation of error distances for sub image combinations, thereby providing a technical effect of reducing an amount of computation and thus saving power consumption.

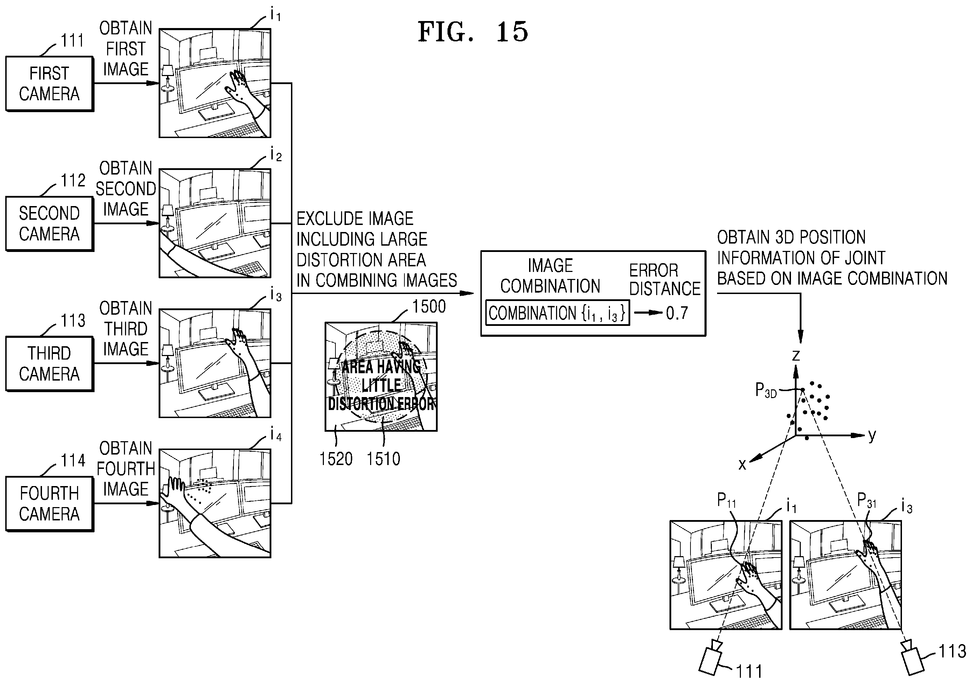

FIG. 15 is a diagram illustrating an operation of the AR device 100 for obtaining 3D position information $P_{3D}$ of a hand joint based on a combination of 2D joint coordinate values $\{P_{11}, P_{31}\}$ obtained from some of image combinations, according to an embodiment of the present disclosure.

Referring to FIG. 15, the AR device 100 may obtain the first image $i_1$ to the fourth image $i_4$ by photographing the user's hand through the first camera 111 to the fourth camera 114. In general, when an image is obtained by using a ultra-wide angle lens such as a fish-eye lens, the image has a relatively small distortion error in a center area of the image while having a relatively large distortion error in an edge area of the image. Referring to a distortion error image 1500, a center area 1510 of the image has a small distortion error and an edge area 1520 of the whole image area except for the center area 1510 has a relatively large distortion error. In the embodiment shown in FIG. 15, the user's hand is located in the center area in the first image $i_1$ and the third image $i_3$, and the user's hand is located in the edge area in the fourth image $i_4$. In the case of the second image $i_2$, the user's hand is located outside the field of view of the second camera 112, so the user's hand is not included in the second image $i_2$.

The processor 120 (see FIG. 3) of the AR device 100 may recognize the user's hand from each of the plurality of images $i_1$ to $i_4$, and identify at least one image in which the recognized hand is located on an edge having a relatively high distortion level among the whole image area. In the embodiment illustrated in FIG. 15, the processor 120 may recognize the user's hand from each of the plurality of images $i_1$ to $i_4$, and identify the fourth image $i_4$ in which the recognized hand is located on an edge of the whole image area. In an embodiment of the present disclosure, the processor 120 may identify the second image $i_2$ in which the user's hand is not recognized, among the plurality of images $i_1$ to $i_4$.

In combining images, the processor 120 may exclude an image having a large distortion area. In the embodiment shown in FIG. 15, the processor 120 may combine images without the fourth image $i_4$ expected to have large distortion because the hand is located on an edge of the whole image area and the second image $i_2$ in which the hand is not recognized. As a result of exclusion of the second image $i_2$ and the fourth image $i_4$, the processor 120 may obtain an image combination including the first image $i_1$ and the third image $i_3$.

The processor 120 may estimate a 3D joint coordinate value based on the combination of 2D joint coordinate values $\{P_{11}, P_{31}\}$ obtained from the image combination including the first image $i_1$ and the third image $i_3$, and calculate an error distance based on the estimated 3D joint coordinate value. For example, the error distance may be calculated to be 0.7.

The processor 120 may obtain 3D position information $P_{3D}$ of a hand joint based on a combination of 2D joint coordinate values $\{P_{11}, P_{31}\}$ obtained from an image combination including the first image $i_1$ and the

third image $i_3$.

In the embodiment shown in FIG. 15, to combine at least two of the plurality of images $i_1$ to $i_4$, the AR device 100 may exclude an image expected to have a relatively large distortion error (in the embodiment of FIG. 15, the second image $i_2$ and the fourth image $i_4$) from the image combination, and obtain the image combination only with the other images. Accordingly, the AR device 100 increases the accuracy of the 3D position information of the hand joint according to an embodiment of the present disclosure. Furthermore, in the embodiment of the present disclosure, the AR device 100 provides a technical effect of reducing an amount of computation for calculating the error distance by reducing the number of image combinations and thus saving power consumption.

FIG. 16 is a flowchart illustrating a method by which the AR device 100 selects some of image combinations based on the maximum number of images allowed to be combined, according to an embodiment of the present disclosure.

Operations S1610 to S1630 shown in FIG. 16 are detailed operations of operation S230 of FIG. 2. Operation S1610 shown in FIG. 16 may be performed after operation S220 of FIG. 2 is performed. Operation S1630 shown in FIG. 16 may be followed by operation S240 shown in FIG. 2.

FIG. 17 is a diagram illustrating an operation of the AR device 100 for obtaining 3D position information $P_{3D}$ of a hand joint based on a combination of 2D joint coordinate values $\{P_{11}, P_{21}\}$ from some of image combinations, according to an embodiment of the present disclosure.

An operation of the AR device 100 for selecting some of the image combinations and obtaining the 3D position information $P_{3D}$ of a hand joint based on the combination of 2D joint coordinate values $\{P_{11}, P_{21}\}$ obtained from the selected image combinations will now be described with reference to FIGS. 16 and 17.

In operation S1610 of FIG. 16, the AR device 100 sets a maximum number of images allowed to be combined among the plurality of images. In an embodiment of the present disclosure, the maximum number of images allowed to be combined is a maximum value of the number of images to make up a combination among the plurality of images, which may be smaller than or equal to the total number of the plurality of images. For example, when the number of the plurality of images is four, the maximum number of images allowed to be combined may have a value of 4 or less (e.g., 3). In an embodiment of the disclosure, the maximum number of images allowed to be combined may be set in advance. It is not, however, limited thereto, and in an embodiment of the present disclosure, the AR device 100 may receive a user input to input the maximum number of images allowed to be combined, and determine the maximum number of images allowed to be combined based on the received user input.

In operation S1620, the AR device 100 calculates an error distance only for an image combination comprised of a number of images equal to or smaller than the set maximum number. Referring to FIG. 17, the AR device 100 may obtain the first image $i_1$ to the fourth image $i_4$ by photographing the user's hand through the first camera 111 to the fourth camera 114. In the embodiment shown in FIG. 17, the maximum number of images allowed to be combined may be three. The processor 120 (see FIG. 3) of the AR device 100 may obtain image combinations (the second to eleventh combinations) comprised of at least two and up to three images of the first image $i_1$ to the fourth image $i_4$. The second to fifth combinations are image combinations comprised of three images among the first image $i_1$ to the fourth image $i_4$, and the sixth to eleventh combinations are image combinations comprised of two images among the first image $i_1$ to the fourth image $i_4$. The processor 120 may estimate a 3D joint coordinate value based on a combination of 2D joint coordinate values obtained from each of the second to eleventh combinations, and calculate an error distance for each image combination based on the estimated 3D joint coordinate value.

Referring back to FIG. 16, in operation S1630, the AR device 100 selects an image combination having the calculated error distance being the smallest. Referring to FIG. 17, the processor 120 of the AR device 100 may select the sixth combination having the calculated error distance being the smallest value of 0.1 from among the second to eleventh combinations each comprised of a maximum number (e.g., 3) of images. The processor 120 may obtain 3D position information $P_{3D}$ of a hand joint based on a combination of 2D joint coordinate values $\{P_{11}, P_{21}\}$ obtained from the first image $i_1$ and the second image $i_2$ which constitute the sixth combination.

In the embodiments shown in FIGS. 16 and 17, the AR device 100 sets a maximum number of images allowed to make up an image combination and selects an image combination having the error distance being the smallest from among the image combinations each comprised of a number of images equal to or smaller than the set maximum number, thereby providing a technical effect of reducing an amount of computation for calculating error distances and saving power consumption.

FIG. 18 is a diagram illustrating an operation of the AR device 100 for obtaining 3D position information $P_{3D}$ of a hand joint based on a combination comprised of 2D joint coordinate values $\{P_{11}, P_{21}\}$ from an image combination $\{i_1, i_2\}$ and a 2D joint coordinate value $P_{41}$ obtained from an additionally selected image frame $i_4$, according to an embodiment of the present disclosure.

Referring to FIG. 18, the processor 120 (see FIG. 3) of the AR device 100 may select the sixth combination having the smallest error distance from among the first to eleventh combinations, each being a combination of at least two of the first image $i_1$ to the fourth image $i_4$. The processor 120 may select the 2D joint coordinate value $P_{41}$ in addition to the combination of 2D joint co-

ordinate values $\{P_{11}, P_{21}\}$ obtained from the first image $i_1$ and the second image $i_2$ which constitute the sixth combination. In an embodiment of the present disclosure, the processor 120 may measure a length $l_i$ between hand joints based on 3D joint coordinate values obtained from the other images $i_3$ and $i_4$ than the first image $i_1$ and the second image $i_2$ which constitute the sixth combination among the plurality of images $i_1$ to $i_4$, and select 2D joint coordinate values between which a similar length $l_i$ between joints to a length between joints stored in the memory 130 (see FIG. 3) is measured. In the embodiment of the present disclosure, the processor 120 may additionally select the 2D joint coordinate value $P_{41}$ obtained from the fourth image $i_4$.

In an embodiment of the present disclosure, the processor 120 may select 2D joint coordinate values that satisfy kinematics from among at least two joint coordinate values obtained from the other images $i_3$ and $i_4$. In the disclosure, the term 'kinematics' may refer to a range of motion of a joint according to the anatomical constraints of the human musculoskeletal system. Cases that kinematics is not satisfied include, for example, i) the wrist joint is measured incorrectly so that the length from the back of the hand to the wrist is longer than the fingers, or a specific finger is too long, ii) a finger joint is bent outward beyond the range of motion of the joint, and iii) the first knuckle of a finger is bent outward beyond the range of motion of the joint and the second knuckle is bent inward. In the embodiment shown in FIG. 18, the processor 120 may select a 2D joint coordinate value (e.g., $P_{41}$) that represents a feature point of a hand joint within a range satisfying the range of motion of the joint according to the anatomical constraints of the human musculoskeletal system.

The processor 120 of the AR device 100 may obtain 3D position information $P_{3D}$ of the hand joint based on a combination including not only the 2D joint coordinate values obtained from the selected image combination (the sixth combination) but the additionally selected 2D joint coordinate value $P_{41}$.

The AR device 100 according to the embodiment shown in FIG. 18 obtains the 3D position information of the hand joint by using not only the 2D joint coordinate values from the selected image combination but the additional 2D joint coordinate value selected based on the length between hand joints, thereby increasing the accuracy of the 3D position information.

An aspect of the present disclosure provides a method by which the AR device 100 obtains 3D position information of a hand joint. According to an embodiment of the present disclosure, an operating method of the AR device may include obtaining 2D joint coordinate values with respect to a feature point of a hand joint from a plurality of images obtained by photographing the user's hand through the plurality of cameras 111, 112, 113 and 114, in operation S210. The operating method of the AR device 100 may include obtaining a 3D joint coordinate value of the hand joint based on a combination of the 2D joint coordinate values obtained from image combinations each comprised of at least two of the plurality of images, in operation S220. The operating method of the AR device 100 may include selecting an image combination having an error distance calculated based on the obtained 3D joint coordinate values being the smallest from among the image combinations, in operation S230. The operating method of the AR device 100 may include obtaining 3D position information of the hand joint based on a combination of 2D joint coordinate values from at least two images which constitute the selected image combination, in operation S240.

In an embodiment of the present disclosure, the selecting of the image combination in operation S230 may include, when a length between hand joints is not stored in a memory, calculating an error distance occurring in converting 2D joint coordinate values obtained from at least two images constituting each image combination to a 3D joint coordinate value in operation S520; and selecting an image combination having the calculated error distance being the smallest from among the image combinations in operation S530.

In an embodiment of the present disclosure, the calculating of the error distance in operation S520 may include obtaining information about a center position of a virtual 3D structure formed by rays extending from a center position of at least two of the plurality of cameras 111, 112, 113 and 114 to the 2D joint coordinate values in the at least two images in operation S610; and calculating an error distance based on a shortest distance from the center position of the virtual 3D structure to each ray in operation S620.

In an embodiment of the present disclosure, the selecting of the image combination in operation S230 may include measuring a length between the hand joints based on the obtained 3D joint coordinate values in operation S810; and calculating an error distance based on the measured length between hand joints and information about a length between joints stored in the memory in operation S820. The selecting of the image combination in operation S230 may include selecting an image combination having the calculated error distance being the smallest from among the image combinations, in operation S560.

In an embodiment of the present disclosure, the calculating of the error distance in operation S820 may include normalizing the error distance based on a difference between the mean value of the stored lengths between joints and the measured length between hand joints and a standard deviation of the stored lengths between joints.

In an embodiment of the present disclosure, the selecting of the image combination in operation S230 may include selecting at least two cameras based on preset priorities from among the plurality of cameras 111, 112, 113 and 114 in operation S1020 when a plurality of image combinations having the calculated error distances being the same, or a plurality of image combinations having the calculated error distances being equal to or less than a threshold are identified. The selecting of the image combination in operation S230 may include selecting an image combination comprised of at least two images photographed and obtained by the at least two selected cameras in operation S1030.

In an embodiment of the present disclosure, the operating method of the AR device 100 may further include, after obtaining 3D position information of a hand joint from an image combination of first image frames, obtaining at least two second image frames by using at least two cameras configured to obtain at least two images included in the selected image combination among the plurality of cameras 111, 112, 113 and 114. The operating method of the AR device 100 may further include obtaining 3D position information of the hand joint based on a combination of 2D joint coordinate values obtained from a combination of at least two second image frames.

In an embodiment of the present disclosure, the selecting of the image combination in operation S230 may further include identifying an image combination having a calculated error distance exceeding the preset threshold in operation S1310; and skipping and not performing error distance calculation for sub-combinations of the identified image combination in operation S1320. The selecting of the image combination in operation S230 may further include selecting an image combination having the smallest error distance from among image combinations whose error distances are calculated, in operation S1330.

In an embodiment of the present disclosure, the selecting of the image combination in operation S230 may include setting a maximum number of images allowed to be combined among the plurality of images in operation S1610; and calculating an error distance only for an image combination comprised of a number of images equal to or smaller than the set maximum number in operation S1620. The selecting of the image combination in operation S230 may include selecting an image combination having the smallest error distance from among image combinations whose error distances are calculated, in operation S1630.

In an embodiment of the present disclosure, the obtaining of the 3D position information of the hand joint in operation S240 may include additionally selecting at least one 2D joint coordinate value which forms a length between hand joints similar to a pre-stored length between joints from among 2D joint coordinate values obtained from images other than the images included in the selected image combination. The obtaining of the 3D position information of the hand joint in operation S240 may further include obtaining 3D position information of the hand joint based on both a combination of 2D joint coordinate values obtained from at least two images included in the selected image combination and the additionally selected at least one 2D joint coordinate value.

In an embodiment of the present disclosure, in additionally selecting the at least one 2D joint coordinate value, the AR device 100 may select a 2D joint coordinate value representing a feature point of the hand joint in the range of motion of the joint according to the anatomical constraints of the human musculoskeletal system from among the at least one 2D joint coordinate value obtained from the other images.

Another aspect of the present disclosure provides the AR device 100 for obtaining 3D position information of a hand joint. According to an embodiment of the present disclosure, the AR device may include the plurality of cameras 111, 112, 113 and 114 for obtaining a plurality of images by photographing the user's hand, memory 130 storing at least one instruction, and at least one processor 120 configured to execute the at least one instruction. The at least one processor 120 may execute the at least one instruction to obtain 2D joint coordinate values with respect to feature points of a hand joint from a plurality of images obtained through the plurality of cameras 111, 112, 113 and 114. The at least one processor 120 may execute the at least one instruction to obtain a 3D joint coordinate value of the hand joint based on a combination of 2D joint coordinate values obtained from image combinations each comprised of at least two of the plurality of images. The at least one processor 120 may execute the at least one instruction to select an image combination having an error distance calculated based on the obtained 3D joint coordinate value being the smallest from among the image combinations. The at least one processor 120 may execute the at least one instruction to obtain 3D position information of the hand joint based on a combination of 2D joint coordinate values from at least two images which constitute the selected image combination.

In an embodiment of the present disclosure, the at least one processor 120 may execute the at least one instruction to calculate an error distance occurring in converting 2D joint coordinate values obtained from at least two images which constitute each image combination to a 3D joint coordinate value when no length between hand joints is stored in the memory 130. The at least one processor 120 may select an image combination having the calculated error distance being the smallest from among the image combinations.

In an embodiment of the present disclosure, the at least one processor 120 may execute the at least one instruction to obtain information about a center position of a virtual 3D structure formed by rays extending from a center position of at least two of the plurality of cameras 111, 112, 113 and 114 to the 2D joint coordinate values in the at least two images. The at least one processor 120 may execute the at least one instruction to calculate an error distance based on a shortest distance from the center position of the virtual 3D structure to each of the rays.

In an embodiment of the present disclosure, the at least one processor 120 may execute the at least one instruction to measure a length between hand joints based on the obtained 3D joint coordinate values, and calculate an error distance based on the measured length between hand joints and length information between joints stored in the memory 130. The at least one processor 120 may select an image combination having the smallest calculated error distance from among the image combinations.

In an embodiment of the present disclosure, the at least one processor 120 may execute the at least one instruction to select at least two cameras based on preset priorities from among the plurality of cameras 111, 112, 113 and 114 when a plurality of image combinations having the same calculated error distance are identified or when a plurality of image combinations each having a calculated error distance equal to or less than a threshold are identified. The at least one processor 120 may execute the at least one instruction to select an image combination comprised of at least two images photographed and obtained by the at least two selected cameras.

In an embodiment of the present disclosure, the at least one processor 120 may execute the at least one instruction to, after obtaining 3D position information of the hand joint from an image combination of first image frames, obtain at least two second image frames by using at least two cameras configured to obtain at least two images included in the selected image combination among the plurality of cameras 111, 112, 113 and 114. The at least one processor 120 may execute the at least one instruction to obtain 3D position information of the hand joint based on a combination of 2D joint coordinate values obtained from a combination of at least two second image frames.

In an embodiment of the present disclosure, the at least one processor 120 may execute the at least one instruction to identify an image combination having the calculated error distance exceeding the preset threshold, and skip error distance calculation for sub-combinations of the identified image combination. The at least one processor 120 may execute the at least one instruction to select an image combination having the smallest error distance from among image combinations whose error distances are calculated.

In an embodiment of the present disclosure, the at least one processor 120 may execute the at least one instruction to set a maximum number of images allowed to be combined among a plurality of images, and calculate an error distance only for an image combination comprised of a number of images equal to or smaller than the set maximum number. The at least one processor 120 may execute the at least one instruction to select an image combination having the smallest error distance from among the image combinations whose error distances are calculated.

Another aspect of the present disclosure provides a computer program product including a computer-readable storage medium. The storage medium may include instructions which are readable to the AR device 100 to cause the AR device 100 to perform obtaining 2D joint coordinate values with respect to a feature point of a hand joint from a plurality of images obtained by photographing the user's hand through the plurality of cameras 111, 112, 113 and 114; obtaining a 3D joint coordinate value of the hand joint based on a combination of 2D joint coordinate values obtained from image combinations each comprised of at least two of the plurality of images; selecting an image combination having an error distance calculated based on the obtained 3D joint coordinate value being the smallest from among the image combinations; and obtaining 3D position information of the hand joint based on a combination of 2D joint coordinate values from at least two images which constitute the selected image combination.

A program executed by the AR device 100 as described in the present disclosure may be implemented in hardware elements, software elements, and/or a combination thereof. The program may be performed by any system capable of performing computer-readable instructions.

The software may include a computer program, codes, instructions, or one or more combinations of them, and may configure a processing device to operate as desired or instruct the processing device independently or collectively.

The software may be implemented with a computer program including instructions stored in a computer-readable recording (or storage) medium. Examples of the computer-readable recording medium include a magnetic storage medium (e.g., a read only memory (ROM), a floppy disk, a hard disk, etc.), and an optical recording medium (e.g., a compact disc ROM (CD-ROM), or a digital versatile disc (DVD)). The computer-readable recording medium may also be distributed over network-coupled computer systems so that the computer-readable codes may be stored and executed in a distributed fashion. The media may be read by the computer, stored in the memory, and executed by the processor.

The computer-readable storage medium may be provided in the form of a non-transitory storage medium. The term 'non-transitory' means that the storage medium is tangible without including a signal, but does not distinguish any data stored semi-permanently or temporarily in the storage medium. For example, the non-transitory storage medium may include a buffer that temporarily stores data.

Furthermore, the program according to the embodiments of the disclosure may be provided in a computer program product. The computer program product may be a commercial product that may be traded between a seller and a buyer.

The computer program product may include a software program and a computer-readable storage medium having the software program stored thereon. For example, the computer program product may include a product (e.g., a downloadable application) in the form of a software program that is electronically distributed by the manufacturer of the AR device 100 or by an electronic market (e.g., Samsung Galaxy store®). For the electronic distribution, at least a portion of the software program may be stored in a storage medium or arbitrarily generated. In this case, the storage medium may be one of a server of the manufacturer of the AR device 100, a server of the electronic market, or a relay server that temporarily stores the software program.

The computer program product may include a storage medium of a server or a storage medium of the AR device 100 in a system including the AR device 100 and/or the server. Alternatively, when there is a third device (e.g., a mobile device) communicatively connected to the AR device 100, the computer program product may include a storage medium of the third device. In another example, the computer program product may include a software program itself that is transmitted from the AR device 100 to the third device or transmitted from the third device to the electronic device.

In this case, one of the AR device 100 or the third device may execute the computer program product to perform the method according to the embodiments of the disclosure. Alternatively, at least one of the AR device 100 and the third device may execute the computer program product to perform the method according to the embodiments of the disclosure in a distributed fashion.

For example, the AR device 100 may execute the computer program product stored in the memory 130 (see FIG. 3) to control another electronic device communicatively connected to the AR device 100 to perform the method according to the embodiments of the disclosure.

In another example, the third device may execute the computer program product to control the electronic device communicatively connected to the third device to perform the method according to the embodiments of the disclosure.

In the case that the third device executes the computer program product, the third device may download the computer program product from the AR device 100 and execute the downloaded computer program product. Alternatively, the third device may execute the computer program product that is preloaded to perform the method according to the embodiments of the disclosure.

Although the disclosure is described with reference to some embodiments as described above and accompanying drawings, it will be apparent to those of ordinary skill in the art that various modifications and changes can be made to the embodiments. For example, the aforementioned method may be performed in a different order, and/or the aforementioned components such as a computer system or a module may be combined in a different form from what is described above, and/or replaced or substituted by other components or equivalents thereof, to obtain appropriate results.

**Claims**

1. A method by which an augmented reality (AR) device (100) obtains three dimensional (3D) position information of hand joints, the method comprising:

   obtaining two dimensional (2D) joint coordinate values with respect to feature points of hand joints from a plurality of images obtained by photographing a user's hand through a plurality of cameras (111, 112, 113 and 114) (S210); estimating 3D joint coordinate values of the hand joints based on a combination of the 2D joint coordinate values obtained from image combinations each comprised of at least two of the plurality of images (S220); selecting an image combination having an error distance calculated based on the estimated 3D joint coordinate values that is the smallest from among the image combinations (S230); and obtaining 3D position information of the hand joints based on a combination of 2D joint coordinate values from at least two images which constitute the selected image combination (S240).

2. The method of claim 1, wherein the selecting of the image combination (S230) comprises

   when a length between the hand joints is not stored in memory, calculating an error distance which occurs when converting the 2D joint coordinate values obtained from the at least two images constituting each of the image combinations to the 3D joint coordinate values (S520); and selecting an image combination having the calculated error distance that is the smallest from among the image combinations (S530).

3. The method of claim 1, wherein the selecting of the image combination (S230) comprises

   measuring a length between the hand joints based on the estimated 3D joint coordinate values (S810); calculating the error distance based on the measured length between the hand joints and information about lengths between joints stored in memory (S820); and selecting an image combination having the calculated error distance that is the smallest from among the image combinations (S560).

4. The method of any one of claims 1 to 3, wherein the selecting of the image combination (S230) comprises

   selecting at least two cameras based on preset priorities from among the plurality of cameras (111, 112, 113 and 114) when a plurality of image combinations having the calculated error distances that are the same or equal to or less than a threshold are identified (S1020); and selecting an image combination comprised of at least two images photographed and obtained by the at least two selected cameras (S1030).

5. The method of any one of claims 1 to 4, further comprising:

   after obtaining 3D position information of the hand joints from an image combination of first image frames, obtaining at least two second image frames by using at least two cameras configured to obtain at least two images included in the selected image combination among the plurality of cameras (111, 112, 113 and 114); and obtaining 3D position information of the hand joints based on a combination of 2D joint coordinate values obtained from a combination of the at least two second image frames.

6. The method of any one of claims 1 to 5, wherein the selecting of the image combination (S230) comprises

   identifying an image combination having the calculated error distance exceeding a preset threshold (S1310); skipping and not performing calculations of error distances for sub-combinations of the identified image combination (S1320); and selecting an image combination having the calculated error distance that is the smallest from among image combinations having the error distances calculated (S1330).

7. The method of any one of claims 1 to 6, wherein the selecting of the image combination (S230) comprises

   setting a maximum number of images allowed to be combined among the plurality of images (S1610); calculating the error distance only for an image combination comprised of a number of images equal to or smaller than the set maximum number (S1620); and selecting an image combination having the error distance that is the smallest from among image combinations having the error distances calculated (S1630).

8. An augmented reality (AR) device (100) for obtaining three dimensional (3D) position information of hand joints, the AR device (100) comprising:

a plurality of cameras (111, 112, 113 and 114) configured to obtain a plurality of images by photographing a user's hand;

memory (130) storing at least one instruction; and

at least one processor (120) configured to execute the at least one instruction,

wherein the at least one processor (120) is configured to

obtain two dimensional (2D) joint coordinate values with respect to feature points of hand joints from a plurality of images obtained through the plurality of cameras (111, 112, 113 and 114),

estimate 3D joint coordinate values of the hand joints based on a combination of the 2D joint coordinate values obtained from image combinations each comprised of at least two of the plurality of images,

select an image combination having an error distance calculated based on the estimated 3D joint coordinate values that is the smallest from among the image combinations,

obtain 3D position information of the hand joints based on a combination of 2D joint coordinate values from at least two images which constitute the selected image combination.

9. The AR device (100) of claim 8, wherein the at least one processor (120) is configured to execute the at least one instruction to:

when a length between the hand joints is not stored in the memory (130), calculate an error distance which occurs when converting the 2D joint coordinate values obtained from the at least two images constituting each of the image combinations to the 3D joint coordinate values, and

select an image combination having the calculated error distance that is the smallest from among the image combinations.

10. The AR device (100) of claim 8, wherein the at least one processor (120) is configured to execute the at least one instruction to:

measure a length between the hand joints based on the estimated 3D joint coordinate values,

calculate the error distance based on the measured length between the hand joints and information about lengths between joints stored in the memory (130), and

select an image combination having the calculated error distance that is the smallest from among the image combinations.

11. The AR device (100) of any one of claims 8 to 10, wherein the at least one processor (120) is configured to execute the at least one instruction to:

select at least two cameras based on preset priorities from among the plurality of cameras (111, 112, 113 and 114) when a plurality of image combinations having the calculated error distances that are the same or equal to or less than a threshold are identified, and

select an image combination comprised of at least two images photographed and obtained by the at least two selected cameras.

12. The AR device (100) of any one of claims 8 to 11, wherein the at least one processor (120) is configured to execute the at least one instruction to:

after obtaining 3D position information of the hand joints from an image combination of first image frames, obtain at least two second image frames by using at least two cameras configured to obtain at least two images included in the selected image combination among the plurality of cameras (111, 112, 113 and 114), and

obtain 3D position information of the hand joints based on a combination of 2D joint coordinate values obtained from a combination of the at least two second image frames.

13. The AR device (100) of any one of claims 8 to 12, wherein the at least one processor (120) is configured to execute the at least one instruction to:

identify an image combination having the calculated error distance exceeding a preset threshold, and skip and not perform error distance calculations for sub-combinations of the identified image combination,

select an image combination having the calculated error distance that is the smallest from among image combinations having the error distances calculated.

14. The AR device (100) of any one of claims 8 to 13, wherein the at least one processor (120) is configured to execute the at least one instruction to:

set a maximum number of images allowed to be combined among the plurality of images,

calculate the error distance only for an image combination comprised of a number of images equal to or smaller than the set maximum number, and

select an image combination having the calculated error distance that is the smallest from among image combinations having the error distances calculated.

15. A computer program product comprising a computer-readable storage medium, wherein the storage medium comprises instructions regarding a method by which an augmented reality (AR) device (100) obtains three dimensional (3D) position information of hand joints, the method comprising:

obtaining two dimensional (2D) joint coordinate values with respect to feature points of hand joints from a plurality of images obtained by photographing a user's hand through a plurality of cameras (111, 112, 113 and 114);
estimating three dimensional (3D) joint coordinate values of the hand joints based on a combination of the 2D joint coordinate values obtained from image combinations each comprised of at least two of the plurality of images;
selecting an image combination having an error distance calculated based on the estimated 3D joint coordinate values that is the smallest from among the image combinations; and
obtaining 3D position information of the hand joints based on a combination of 2D joint coordinate values from at least two images which constitute the selected image combination.

# FIG. 1

① OBTAIN MULTIPLE IMAGES BY PHOTOGRAPHING USER'S HAND THROUGH MULTIPLE CAMERAS

② OBTAIN 2D JOINT COORDINATE VALUES FROM MULTIPLE IMAGES

③ ESTIMATE 3D JOINT COORDINATE VALUE OF HAND JOINT BASED ON 2D JOINT COORDINATE VALUES FROM COMBINATION OF AT LEAST TWO IMAGES

④ SELECT IMAGE COMBINATION HAVING SMALLEST ERROR DISTANCE FROM AMONG IMAGE COMBINATIONS

⑤ OBTAIN 3D POSITION INFORMATION OF HAND JOINT BASED ON COMBINATION OF 2D JOINT COORDINATE VALUES FROM SELECTED IMAGE COMBINATION

POSITIONAL RELATIONSHIP BETWEEN CAMERAS (R|t)

| IMAGE COMBINATION | ERROR DISTANCE |
|---|---|
| COMBINATION 1 {$i_1$, $i_2$, $i_3$, $i_4$} | 0.9 |
| COMBINATION 2 {$i_1$, $i_2$, $i_3$} | 0.8 |
| COMBINATION 3 {$i_1$, $i_2$, $i_4$} | 0.8 |
| COMBINATION 4 {$i_1$, $i_3$, $i_4$} | 0.7 |
| COMBINATION 5 {$i_2$, $i_3$, $i_4$} | 0.6 |
| COMBINATION 6 {$i_1$, $i_2$} | 0.1 |
| COMBINATION 7 {$i_1$, $i_3$} | 0.7 |
| COMBINATION 8 {$i_1$, $i_4$} | 0.2 |
| COMBINATION 9 {$i_2$, $i_3$} | 0.3 |
| COMBINATION 10 {$i_2$, $i_4$} | 0.3 |
| COMBINATION 11 {$i_3$, $i_4$} | 0.4 |

# FIG. 2

START

OBTAIN 2D JOINT COORDINATE VALUE WITH RESPECT TO FEATURE POINT OF HAND JOINT FROM MULTIPLE IMAGES OBTAINED BY PHOTOGRAPHING USER'S HAND THROUGH MULTIPLE CAMERAS — S210

ESTIMATE 3D JOINT COORDINATE VALUE OF HAND JOINT BASED ON COMBINATION OF 2D JOINT COORDINATE VALUES OBTAINED FROM IMAGE COMBINATIONS EACH COMPRISED OF AT LEAST TWO OF MULTIPLE IMAGES — S220

SELECT IMAGE COMBINATION HAVING SMALLEST ERROR DISTANCE CALCULATED BASED ON ESTIMATED 3D JOINT COORDINATE VALUE FROM AMONG IMAGE COMBINATIONS — S230

OBTAIN 3D POSITION INFORMATION OF HAND JOINT BASED ON COMBINATION OF 2D JOINT COORDINATE VALUES FROM SELECTED IMAGE COMBINATION — S240

END

# FIG. 3

```
                                                              ┌─ 100
┌──────────────────────────────────────────────────────────────┐
│                 AUGMENTED REALITY (AR) DEVICE                  │
│        ┌─ 110                              ┌─ 120             │
│  ┌──────────────────┐          ┌──────────────────────┐      │
│  │                  │ ────────▶ │                      │      │
│  │     CAMERA       │          │      PROCESSOR        │      │
│  │                  │ ◀──────── │                      │      │
│  └──────────────────┘          └──────────────────────┘      │
│                                           │    ▲    │         │
│                                           │    │    │  ┌─ 130 │
│  ┌────────────────────────────────────────┼────┼────┼──────┐ │
│  │                      MEMORY             ▼    │    ▼      │ │
│  │  ┌─ 132        ┌─ 134        ┌─ 136        ┌─ 138        │ │
│  │ ┌──────────┐  ┌──────────┐  ┌──────────┐  ┌──────────┐  │ │
│  │ │ 2D JOINT │  │ 3D JOINT │  │  IMAGE   │  │  DB OF   │  │ │
│  │ │COORDINATES│ │COORDINATES│ │COMBINATION│ │  LENGTH  │  │ │
│  │ │OBTAINING │  │OBTAINING │  │SELECTING │  │ BETWEEN  │  │ │
│  │ │ MODULE   │  │ MODULE   │  │ MODULE   │  │  JOINTS  │  │ │
│  │ └──────────┘  └──────────┘  └──────────┘  └──────────┘  │ │
│  └──────────────────────────────────────────────────────────┘ │
└──────────────────────────────────────────────────────────────┘
```

# FIG. 4

OBTAIN MULTIPLE IMAGES BY PHOTOGRAPHING USER'S HAND THROUGH MULTIPLE CAMERAS — S410

OBTAIN 2D JOINT COORDINATE VALUE BY RECOGNIZING FEATURE POINT OF HAND JOINT FROM EACH OF MULTIPLE IMAGES — S420

CORRECT DISTORTION OF 2D JOINT COORDINATE VALUE BASED ON COMBINATION OF 2D JOINT COORDINATE VALUES RESULTING FROM DISTORTION CORRECTION AND POSITIONAL RELATIONSHIP BETWEEN MULTIPLE CAMERAS — S430

— S210

CALCULATES 3D POSITION COORDINATE VALUE OF HAND JOINT BASED ON COMBINATION OF 2D JOINT COORDINATE VALUES RESULTING FROM DISTORTION CORRECTION AND POSITIONAL RELATIONSHIP BETWEEN MULTIPLE CAMERAS — S440

— S220

END

FIG. 5

```
                    ( S220 )
                       │
                       ▼
              ┌─────────────────┐ ─ S510
              │   WHETHER IN    │              YES
         ◄────│ INFORMATION ABOUT LENGTH ├──────────────────────────┐
              │ BETWEEN JOINTS IS STORED │                          │
              │    IN MEMORY?   │                                    │
              └─────────────────┘                                   │
                       │ NO      ─ S520                              │ ─ S550
                       ▼                                             ▼
┌──────────────────────────────────────────┐    ┌──────────────────────────────────────────┐
│ CALCULATE ERROR DISTANCE OCCURRING IN      │    │ CALCULATE ERROR DISTANCE BY COMPARING      │
│ CONVERTING 2D JOINT COORDINATE VALUE       │    │ LENGTH BETWEEN HAND JOINTS MEASURED        │
│ OBTAINED FROM AT LEAST TWO IMAGES THAT     │    │ BASED ON ESTIMATED 3D JOINT COORDINATE     │
│ CONSTITUTE EACH IMAGE COMBINATION TO       │    │ VALUE WITH JOINT LENGTH STORED IN MEMORY   │
│ 3D JOINT COORDINATE VALUE                  │    └──────────────────────────────────────────┘
└──────────────────────────────────────────┘                       │
                       │         ─ S530                             │ ─ S560
                       ▼                                             ▼
┌──────────────────────────────────────────┐    ┌──────────────────────────────────────────┐
│ SELECT IMAGE COMBINATION HAVING CALCULATED │    │ SELECT IMAGE COMBINATION HAVING CALCULATED │
│ ERROR DISTANCE BEING THE SMALLEST FROM     │    │ ERROR DISTANCE BEING THE SMALLEST FROM     │
│ AMONG IMAGE COMBINATIONS                   │    │ AMONG IMAGE COMBINATIONS                    │
└──────────────────────────────────────────┘    └──────────────────────────────────────────┘
                       │         ─ S540                             │ ─ S570
                       ▼                                             ▼
┌──────────────────────────────────────────┐    ┌──────────────────────────────────────────┐
│ OBTAIN 3D JOINT COORDINATE VALUE BASED ON  │    │ OBTAIN 3D JOINT COORDINATE VALUE BASED ON  │
│ COMBINATION OF 2D JOINT COORDINATE VALUE   │    │ COMBINATION OF 2D JOINT COORDINATE VALUES  │
│ FROM SELECTED IMAGE COMBINATION            │    │ FROM SELECTED IMAGE COMBINATION            │
└──────────────────────────────────────────┘    └──────────────────────────────────────────┘
                       │                                             │ ─ S580
                       │                                             ▼
                       │                          ┌──────────────────────────────────────────┐
                       │                          │ STORE MEASURED LENGTH BETWEEN HAND JOINTS   │
                       │                          │ BASED ON OBTAINED 3D JOINT COORDINATE VALUE │
                       │                          └──────────────────────────────────────────┘
                       │                                             │
                       ▼◄────────────────────────────────────────────┘
                    ( S240 )
```

S230

EP 4 764 792 A1

# FIG. 6

S510

OBTAIN INFORMATION ABOUT CENTER POSITION OF
VIRTUAL 3D STRUCTURE FORMED BY RAYS
EXTENDING FROM CENTER POSITION OF AT LEAST
TWO CAMERAS TO 2D JOINT COORDINATE VALUES
IN AT LEAST TWO IMAGES — S610

CALCULATE ERROR DISTANCE BASED ON SHORTEST
DISTANCE FROM CENTER POSITION OF VIRTUAL
3D STRUCTURE TO EACH RAY — S620

— S520

S530

# FIG. 7

# FIG. 8

S510

MEASURE LENGTH BETWEEN HAND JOINTS BASED ON ESTIMATED 3D JOINT COORDINATE VALUES — S810

CALCULATE ERROR DISTANCE BASED ON MEASURED LENGTH BETWEEN HAND JOINTS AND LENGTH INFORMATION BETWEEN JOINTS STORED IN MEMORY — S820

— S550

S560

# FIG. 9

# FIG. 10

```
                    ┌─────────┐
                    │  S220   │
                    └────┬────┘
                         │
  ┌ ─ ─ ─ ─ ─ ─ ─ ─ ─ ─ ─│─ ─ ─ ─ ─ ─ ─ ─ ─ ─ ─ ┐
  │      ┌──────────────▼─────────────────┐      │
  │      │ IDENTIFY WHETHER THERE ARE      │      │
  │      │ MULTIPLE IMAGE                  │──S1010│
  │      │ COMBINATIONS HAVING ERROR       │      │
  │      │ DISTANCES BEING THE             │      │
  │      │ SAME OR EQUAL TO OR SMALLER     │      │
  │      │ THAN THRESHOLD                  │      │
  │      └──────────────┬─────────────────┘      │
  │                     │                        │      S230
  │      ┌──────────────▼─────────────────┐      │
  │      │ SELECT AT LEAST TWO OF MULTIPLE │──S1020│
  │      │ CAMERAS BASED ON PRESET         │      │
  │      │ PRIORITIES                      │      │
  │      └──────────────┬─────────────────┘      │
  │                     │                        │
  │      ┌──────────────▼─────────────────┐      │
  │      │ SELECT IMAGE COMBINATION        │──S1030│
  │      │ COMPRISED OF AT LEAST TWO       │      │
  │      │ IMAGES PHOTOGRAPHED AND         │      │
  │      │ OBTAINED BY AT LEAST TWO        │      │
  │      │ SELECTED CAMERAS                │      │
  │      └──────────────┬─────────────────┘      │
  └ ─ ─ ─ ─ ─ ─ ─ ─ ─ ─ │─ ─ ─ ─ ─ ─ ─ ─ ─ ─ ─ ┘
                    ┌────▼────┐
                    │  S240   │
                    └─────────┘
```

# FIG. 11

FIRST CAMERA 111 → OBTAIN FIRST IMAGE → $i_1$

SECOND CAMERA 112 → OBTAIN SECOND IMAGE → $i_2$

THIRD CAMERA 113 → OBTAIN THIRD IMAGE → $i_3$

FOURTH CAMERA 114 → OBTAIN FOURTH IMAGE → $i_4$

CALCULATE ERROR DISTANCE BASED ON 3D JOINT COORDINATE VALUE ESTIMATED FROM IMAGE COMBINATION

| IMAGE COMBINATION | ERROR DISTANCE |
|---|---|
| COMBINATION 1 $\{i_1, i_2, i_3, i_4\}$ | 0.9 |
| COMBINATION 2 $\{i_1, i_2, i_3\}$ | 0.8 |
| COMBINATION 3 $\{i_1, i_2, i_4\}$ | 0.8 |
| COMBINATION 4 $\{i_1, i_3, i_4\}$ | 0.7 |
| COMBINATION 5 $\{i_2, i_3, i_4\}$ | 0.6 |
| COMBINATION 6 $\{i_1, i_2\}$ | 0.2 |
| COMBINATION 7 $\{i_1, i_3\}$ | 0.7 |
| COMBINATION 8 $\{i_1, i_4\}$ | 0.2 |
| COMBINATION 9 $\{i_2, i_3\}$ | 0.3 |
| COMBINATION 10 $\{i_2, i_4\}$ | 0.3 |
| COMBINATION 11 $\{i_3, i_4\}$ | 0.4 |

THRESHOLD : 0.3

OBTAIN 3D JOINT COORDINATE VALUE FROM 2D IMAGE OBTAINED BY CAMERA SELECTED ACCORDING TO PRESET PRIORITY

$P_{3D}$

$z$

$y$

$x$

$P_{11}$  $i_1$

$P_{41}$  $i_4$

111

114

# FIG. 12

OBTAIN 3D POSITION INFORMATION OF HAND JOINT FROM IMAGE COMBINATION COMPRISED OF FIRST IMAGE FRAMES —— S1210

SELECT AT LEAST TWO OF MULTIPLE CAMERAS CONFIGURED TO OBTAIN AT LEAST TWO IMAGES OF SELECTED IMAGE COMBINATION —— S1220

USE AT LEAST TWO SELECTED CAMERAS TO OBTAIN AT LEAST TWO SECOND IMAGE FRAMES —— S1230

OBTAIN 3D POSITION INFORMATION OF HAND JOINT BASED ON 2D JOINT COORDINATE VALUE FROM COMBINATION OF AT LEAST TWO SECOND IMAGE FRAMES —— S1240

END

# FIG. 13

```
         ┌─────────┐
         │  S220   │
         └────┬────┘
              │
┌─────────────┼───────────────────────────────────────┐
│             ▼                                         │
│  ┌─────────────────────────────────────────┐         │
│  │ IDENTIFY IMAGE COMBINATION HAVING        │         │
│  │ CALCULATED ERROR DISTANCE EXCEEDING      ├─ S1310  │
│  │ PRESET THRESHOLD                         │         │
│  └─────────────────┬───────────────────────┘         │
│                    ▼                                  │
│  ┌─────────────────────────────────────────┐         │
│  │ SKIP AND NOT PERFORM ERROR DISTANCE      │         │
│  │ CALCULATION FOR SUB-COMBINATION OF       ├─ S1320  ├─ S230
│  │ IDENTIFIED IMAGE COMBINATION             │         │
│  └─────────────────┬───────────────────────┘         │
│                    ▼                                  │
│  ┌─────────────────────────────────────────┐         │
│  │ SELECT IMAGE COMBINATION HAVING SMALLEST │         │
│  │ ERROR DISTANCE FROM AMONG IMAGE          ├─ S1330  │
│  │ COMBINATIONS WHOSE ERROR DISTANCES       │         │
│  │ ARE CALCULATED                           │         │
│  └─────────────────┬───────────────────────┘         │
└────────────────────┼─────────────────────────────────┘
                     ▼
              ┌─────────┐
              │  S240   │
              └─────────┘
```

FIG. 14

| IMAGE COMBINATION | ERROR DISTANCE |
|---|---|
| COMBINATION 1 $\{i_1, i_2, i_3, i_4\}$ | → 0.7 |
| COMBINATION 2 $\{i_1, i_2, i_3\}$ | → 0.8 |
| COMBINATION 3 $\{i_1, i_2, i_4\}$ | → 0.8 |
| COMBINATION 4 $\{i_1, i_3, i_4\}$ | → 0.7 |
| COMBINATION 5 $\{i_2, i_3, i_4\}$ | → 1.7 |
| COMBINATION 6 $\{i_1, i_2\}$ | → 0.1 |
| COMBINATION 7 $\{i_1, i_3\}$ | → 0.7 |
| COMBINATION 8 $\{i_1, i_4\}$ | → 0.2 |
| COMBINATION 9 $\{i_2, i_3\}$ | SKIP CALCULATION |
| COMBINATION 10 $\{i_2, i_4\}$ | SKIP CALCULATION |
| COMBINATION 11 $\{i_3, i_4\}$ | SKIP CALCULATION |

FIRST CAMERA — 111

OBTAIN FIRST IMAGE → $i_1$

SECOND CAMERA — 112

OBTAIN SECOND IMAGE → $i_2$

THIRD CAMERA — 113

OBTAIN THIRD IMAGE → $i_3$

FOURTH CAMERA — 114

OBTAIN FOURTH IMAGE → $i_4$

CALCULATE ERROR DISTANCE BASED ON 3D JOINT COORDINATE VALUE ESTIMATED FROM IMAGE COMBINATION

SELECT IMAGE COMBINATION HAVING SMALLEST ERROR DISTANCE

THRESHOLD: 1

$P_{3D}$

$P_{11}$   $i_1$   $P_{21}$   $i_2$

111   112

EP 4 764 792 A1

# FIG. 15

OBTAIN 3D POSITION INFORMATION OF JOINT BASED ON IMAGE COMBINATION

EP 4 764 792 A1

# FIG. 16

S220

SET MAXIMUM NUMBER OF IMAGES ALLOWED TO BE COMBINED AMONG MULTIPLE IMAGES — S1610

CALCULATE ERROR DISTANCE ONLY FOR IMAGE COMBINATION COMPRISED OF A NUMBER OF IMAGES EQUAL TO OR SMALLER THAN SET MAXIMUM NUMBER — S1620

SELECT IMAGE COMBINATION HAVING CALCULATED ERROR DISTANCE BEING THE SMALLEST — S1630

S230

S240

# FIG. 17

FIRST CAMERA 111 → OBTAIN FIRST IMAGE → $i_1$

SECOND CAMERA 112 → OBTAIN SECOND IMAGE → $i_2$

THIRD CAMERA 113 → OBTAIN THIRD IMAGE → $i_3$

FOURTH CAMERA 114 → OBTAIN FOURTH IMAGE → $i_4$

CALCULATE ERROR DISTANCE ONLY FOR IMAGE COMBINATION COMPRISED OF A NUMBER OF IMAGES EQUAL TO OR SMALLER THAN MAXIMUM NUMBER

| IMAGE COMBINATION | ERROR DISTANCE |
|---|---|
| COMBINATION 1 $\{i_1, i_2, i_3, i_4\}$ | SKIP CALCULATION |
| COMBINATION 2 $\{i_1, i_2, i_3\}$ | → 0.8 |
| COMBINATION 3 $\{i_1, i_2, i_4\}$ | → 0.8 |
| COMBINATION 4 $\{i_1, i_3, i_4\}$ | → 0.7 |
| COMBINATION 5 $\{i_2, i_3, i_4\}$ | → 0.6 |
| COMBINATION 6 $\{i_1, i_2\}$ | → 0.1 |
| COMBINATION 7 $\{i_1, i_3\}$ | → 0.7 |
| COMBINATION 8 $\{i_1, i_4\}$ | → 0.2 |
| COMBINATION 9 $\{i_2, i_3\}$ | → 0.3 |
| COMBINATION 10 $\{i_2, i_4\}$ | → 0.3 |
| COMBINATION 11 $\{i_3, i_4\}$ | → 0.4 |

SELECT COMBINATION OF 2D JOINT COORDINATE VALUES FROM IMAGE COMBINATION HAVING SMALLEST ERROR DISTANCE

$P_{3D}$

$P_{11}$  $i_1$  111

$P_{21}$  $i_2$  112

EP 4 764 792 A1

# FIG. 18

| IMAGE COMBINATION | ERROR DISTANCE |
|---|---|
| COMBINATION 1 $\{i_1, i_2, i_3, i_4\}$ | → 0.9 |
| COMBINATION 2 $\{i_1, i_2, i_3\}$ | → 0.8 |
| COMBINATION 3 $\{i_1, i_2, i_4\}$ | → 0.8 |
| COMBINATION 4 $\{i_1, i_3, i_4\}$ | → 0.7 |
| COMBINATION 5 $\{i_2, i_3, i_4\}$ | → 0.6 |
| COMBINATION 6 $\{i_1, i_2\}$ | → 0.1 |
| COMBINATION 7 $\{i_1, i_3\}$ | → 0.7 |
| COMBINATION 8 $\{i_1, i_4\}$ | → 0.2 |
| COMBINATION 9 $\{i_2, i_3\}$ | → 0.3 |
| COMBINATION 10 $\{i_2, i_4\}$ | → 0.3 |
| COMBINATION 11 $\{i_3, i_4\}$ | → 0.4 |

SELECT COMBINATION OF 2D JOINT COORDINATE VALUES OBTAINED FROM IMAGE COMBINATION HAVING SMALLEST ERROR DISTANCE

ADD 2D JOINT COORDINATES HAVING LENGTH SIMILAR TO EXISTING LENGTH BETWEEN JOINTS AMONG REMAINING IMAGES

EP 4 764 792 A1

## INTERNATIONAL SEARCH REPORT

| | International application No. |
|---|---|
| | **PCT/KR2024/008730** |

| A. | CLASSIFICATION OF SUBJECT MATTER |
|---|---|

**G06F 3/01**(2006.01)i; **G06F 3/00**(2006.01)i; **G06T 19/00**(2011.01)i; **G06V 40/20**(2022.01)i

According to International Patent Classification (IPC) or to both national classification and IPC

| B. | FIELDS SEARCHED |
|---|---|

Minimum documentation searched (classification system followed by classification symbols)

G06F 3/01(2006.01); G06T 13/40(2011.01); G06T 17/20(2006.01); G06T 19/00(2011.01); G06T 19/20(2011.01); G06T 3/40(2006.01); G06V 40/10(2022.01); G06V 40/20(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 증강 현실(augmented reality), 손(hand), 2차원(two dimension), 관절(joint), 좌표값 (coordinate value), 3차원(three dimension), 이미지 조합(image combination), 오차 거리(error distance)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0100472 A (SAMSUNG ELECTRONICS CO., LTD.) 05 July 2023 (2023-07-05)<br>See paragraphs [0046]-[0174]; and figures 1a-8. | 1-15 |
| A | KR 10-2022-0143725 A (SNAP INC.) 25 October 2022 (2022-10-25)<br>See paragraphs [0030]-[0126]; and figures 1-7. | 1-15 |
| A | US 2022-0230406 A1 (QUALCOMM INCORPORATED) 21 July 2022 (2022-07-21)<br>See paragraphs [0036]-[0115]; and figures 1-7. | 1-15 |
| A | KR 10-2023-0043653 A (KOREA UNIVERSITY RESEARCH AND BUSINESS FOUNDATION, SEJONG CAMPUS) 31 March 2023 (2023-03-31)<br>See paragraphs [0039]-[0139]; and figures 1-7. | 1-15 |
| A | KR 10-2022-0108417 A (ZIONNETWORK INC.) 03 August 2022 (2022-08-03)<br>See paragraphs [0047]-[0074]; and figures 1-4. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2024** | **25 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/008730**

| Patent document cited in search report | | | Publication date (day/month/year) | Patent family member(s) | | | Publication date (day/month/year) |
|---|---|---|---|---|---|---|---|
| KR | 10-2023-0100472 | A | 05 July 2023 | US | 2024-0265641 | A1 | 08 August 2024 |
| | | | | WO | 2023-128446 | A1 | 06 July 2023 |
| KR | 10-2022-0143725 | A | 25 October 2022 | CN | 115699088 | A | 03 February 2023 |
| | | | | EP | 4107698 | A1 | 28 December 2022 |
| | | | | KR | 10-2693803 | B1 | 12 August 2024 |
| | | | | US | 2023-0070008 | A1 | 09 March 2023 |
| | | | | WO | 2021-165628 | A1 | 26 August 2021 |
| US | 2022-0230406 | A1 | 21 July 2022 | BR | 112023013736 | A2 | 05 December 2023 |
| | | | | CN | 116848556 | A | 03 October 2023 |
| | | | | EP | 4281937 | A1 | 29 November 2023 |
| | | | | KR | 10-2023-0133293 | A | 19 September 2023 |
| | | | | US | 11514658 | B2 | 29 November 2022 |
| | | | | WO | 2022-159942 | A1 | 28 July 2022 |
| KR | 10-2023-0043653 | A | 31 March 2023 | None | | | |
| KR | 10-2022-0108417 | A | 03 August 2022 | KR | 10-2569857 | B1 | 23 August 2023 |

Form PCT/ISA/210 (patent family annex) (July 2022)